# EUROPEAN PATENT APPLICATION

(11) **EP 4 668 203 A1**
(43) Date of publication of application: **24.12.2025**
(21) Application number: 24807565.7
(22) Date of filing: 16.05.2024
(51) Int. Cl.: G06Q 50/10, H04N 23/60, G06T 19/00, G06T 19/20, G06T 17/00, G06T 5/10, G06V 10/70, G06F 16/587, G06F 18/23213, H04N 13/332

(54) **ELECTRONIC DEVICE FOR GENERATING CONTENT, AND OPERATING METHOD OF ELECTRONIC DEVICE**

(30) Priority: 16.05.2023 KR 20230063361; 13.07.2023 KR 20230091224
(71) Applicant: Samsung Electronics Co., Ltd., Suwon-si, Gyeonggi-do 16677 (KR)
(72) Inventor: JI, Seowon, Suwon-si, Gyeonggi-do 16677 (KR); SHIN, Seunghak, Suwon-si, Gyeonggi-do 16677 (KR); JEONG, Jaeyun, Suwon-si, Gyeonggi-do 16677 (KR); KIM, Hyokak, Suwon-si, Gyeonggi-do 16677 (KR)
(74) Representative: Appleyard Lees IP LLP
(86) International application number: PCT/KR2024/006641
(87) International publication number: WO 2024/237694

(57) **Abstract**

Provided are an electronic apparatus including a camera, a display, a memory storing at least one instruction, and at least one processor configured to execute the at least one instruction stored in the memory, wherein the at least one processor is configured to execute the at least one instruction to obtain at least one preset object from at least one image stored in the memory, display a photographing guide based on the at least one image through the display, obtain spatial information by photographing a reality space corresponding to a space included in the at least one image according to the photographing guide, through the camera, and generate content based on the spatial information and the at least one object, and an operation method of the electronic apparatus.

## Description

### Technical Field

The disclosure relates to an electronic apparatus and an operation method of the electronic apparatus. More specifically, the disclosure relates to an electronic apparatus for generating content and an operation method of the electronic apparatus.

### Background Art

With the advancement of technology, technology that provides users using electronic apparatuses with services using a plurality of pre-photographed images has been developed.

In particular, services of classifying a plurality of images into at least one image taken on similar or consecutive dates based on the dates on which the images were taken or classifying a plurality of images into at least one image taken at adjacent locations by using global positioning system (GPS) information, etc., and providing the classified images to users using electronic apparatuses are being developed.

### Disclosure

### Technical Solution

An embodiment of the disclosure may provide an electronic apparatus. The electronic apparatus may include a camera. The electronic apparatus may include a display. The electronic apparatus may include a memory storing at least one instruction and at least one processor configured to execute the at least one instruction stored in the memory. The at least one processor may be configured to execute the at least one instruction to detect at least one preset object from at least one image stored in the memory. The at least one processor may be configured to execute the at least one instruction to display a photographing guide based on the at least one image through the display. The at least one processor may be configured to execute the at least one instruction to obtain spatial information by photographing a reality space corresponding to a space included in the at least one image according to the photographing guide, through the camera. The at least one processor may be configured to execute the at least one instruction to obtain content based on the spatial information and the at least one object.

An embodiment of the disclosure may provide an operation method of an electronic apparatus. The operation method of the electronic apparatus may include obtaining at least one preset object from at least one image stored in a memory. The operation method of the electronic apparatus may include displaying a photographing guide based on at least one image through a display. The operation method of the electronic apparatus may include obtaining spatial information by photographing a reality space corresponding to a space included in the at least one image according to the photographing guide, through a camera. The operation method of the electronic apparatus may include generating content based on the spatial information and the at least one object.

According to an embodiment of the disclosure, there may be provided a computer-readable recording medium storing a program for performing at least one method among embodiments of the operation method on a computer.

### Description of Drawings

The disclosure may be easily understood by combining the following detailed description with the accompanying drawings, and reference numerals represent structural elements.
FIG. 1 is a view for describing an electronic apparatus according to an embodiment of the disclosure.
FIG. 2 is a block diagram showing a configuration of an electronic apparatus according to an embodiment of the disclosure.
FIG. 3A is a flowchart illustrating an operation method of an electronic apparatus, according to an embodiment of the disclosure.
FIG. 3B is a flowchart illustrating an operation method of generating content in an electronic apparatus by generating a three-dimensional (3D) object and a 3D space and positioning the 3D object in the 3D space, according to an embodiment of the disclosure.
FIG. 3C is a flowchart illustrating an operation of filtering at least one image from a plurality of photographed images and obtaining at least one object based on a selection signal, according to an embodiment of the disclosure.
FIG. 4 is a view for describing an operation of an electronic apparatus according to an embodiment of the disclosure.
FIG. 5A is a view for describing an operation of obtaining at least one object included in an object list from at least one image, according to an embodiment of the disclosure.
FIG. 5B is a view for describing an operation of obtaining at least one object included in a selection signal from at least one image, according to an embodiment of the disclosure.
FIG. 6 is a view for describing an operation of obtaining spatial information according to a photographing guide, according to an embodiment of the disclosure.
FIG. 7A is a view for describing an operation of obtaining spatial information by photographing a reality space according to a photographing guide displayed on a display, according to an embodiment of the disclosure.
FIG. 7B is a view for describing an operation of obtaining spatial information by photographing a reality space according to a photographing guide displayed on a display, according to an embodiment of the disclosure.
FIG. 7C is a view for describing an operation of obtaining spatial information by photographing a reality space according to a photographing guide displayed on a display, according to an embodiment of the disclosure.
FIG. 7D is a view for describing an operation of obtaining spatial information by photographing a reality space according to a photographing guide displayed on a display, according to an embodiment of the disclosure.
FIG. 8A is a view for describing content generated based on obtained spatial information and at least one detected object, according to an embodiment of the disclosure.
FIG. 8B is a view for describing an operation of setting at least one of a location, shape, or size of at least one object obtained from content, based on a control signal, according to an embodiment of the disclosure.
FIG. 9 is a flowchart illustrating an operation of displaying generated content on a display, according to an embodiment of the disclosure.
FIG. 10 is a view for describing an operation of displaying generated content on an electronic apparatus which is a mobile device, according to an embodiment of the disclosure.
FIG. 11 is a view for describing an operation of displaying generated content on an electronic apparatus which is a head mounted display (HMD), according to an embodiment of the disclosure.

### Mode for Invention

Terms used in the disclosure will be briefly described and an embodiment of the disclosure will be described in detail.

Although general terms being currently widely used were selected as terminology used in the disclosure while considering the functions in an embodiment of the disclosure, they may vary according to intentions of one of ordinary skill in the art, judicial precedents, the advent of new technologies, and the like. Also, terms arbitrarily selected by the applicant of the disclosure may also be used in a specific case. In this case, their meanings will be described in detail in the detailed description of the disclosure. Hence, the terms used in the disclosure must be defined based on the meanings of the terms and the contents of the entire specification, not by simply stating the terms themselves.

It is to be understood that the singular forms "a," "an," and "the" include plural referents unless the context clearly dictates otherwise. All terms used herein including technical or scientific terms may have the same meaning as those generally understood by an ordinary person skilled in the technical art to which the present disclosure belongs.

It will be understood that when a certain part "includes" a certain component, the part does not exclude another component but can further include another component, unless the context clearly dictates otherwise. As used herein, the terms "portion", "module", or the like refers to a unit that can perform at least one function or operation, and may be implemented as hardware, software, or a combination of hardware and software.

As used here, the phrase "configured (or set) to" may be interchangeably used with the phrases "suitable for," "having the capacity to," "designed to," "adapted to," "made to," or "capable of" depending on the circumstances. The phrase "configured (or set) to" does not essentially mean "specifically designed in hardware to." Rather, in some circumstances, the phrase "system configured to" may mean that the system can perform an operation together with another device or parts. For example, the phrase "processor configured (or set) to perform A, B, and C" may mean a generic-purpose processor (for example, CPU or application processor) capable of performing the operations by executing one or more software programs stored in a memory, or a dedicated processor (for example, an embedded processor) for performing the operations.

Also, in the disclosure, it will be understood that when a component is "connected" or "coupled" to another component, the component may be directly connected or coupled to the other component, but may alternatively be connected or coupled to the other component with an intervening component therebetween, unless specified otherwise.

In the disclosure, an 'electronic apparatus' may be a smart phone. However, the 'electronic apparatus' may be implemented as one of various types of electronic apparatuses, such as a television (TV), a mobile device, a head mounted display (HMD), a laptop computer, a desktop computer, a tablet PC, an e-book terminal, a digital broadcasting terminal, personal digital assistants (PDA), a portable multimedia player (PMP), a wearable device, etc., although not limited thereto.

Hereinafter, embodiments of the disclosure will be described in detail with reference to the accompanying drawings such that the disclosure may be readily implemented by those of ordinary skill in the technical art to which the disclosure belongs. However, the disclosure is not restricted by these embodiments but can be implemented in many different forms. Also, in the drawings, parts irrelevant to the description are omitted to definitely describe an embodiment of the disclosure, and like reference numerals refer to like parts throughout the entire disclosure.

Hereinafter, embodiments of the disclosure will be described in detail with reference to the accompanying drawings.

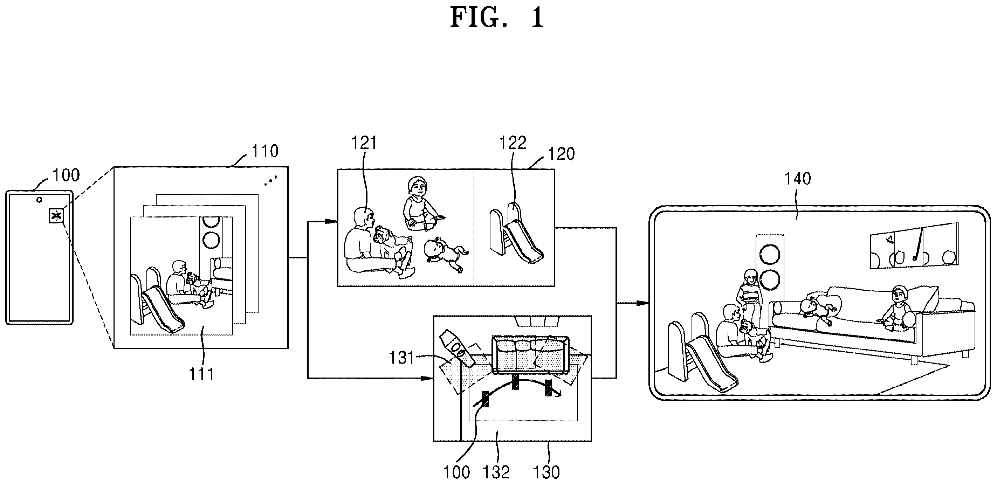

FIG. 1 is a view for describing an electronic apparatus according to an embodiment of the disclosure.

Referring to FIG. 1, according to an embodiment of the disclosure, an electronic apparatus 100 may generate content 140 based on spatial information obtained through the electronic apparatus 100 and at least one object 121 and 122 obtained from at least one image 111 stored in the electronic apparatus 100. According to an embodiment of the disclosure, the electronic apparatus 100 may provide the generated content 140 to a user who uses the electronic apparatus 100.

FIG. 1 shows a case in which the electronic apparatus 100 has a shape of a smart phone. However, the disclosure is not limited thereto. The electronic apparatus 100 may be implemented as one of various types of displays, such as a mobile device, a wearable device, a HMD, a tablet PC, a laptop computer, and the like.

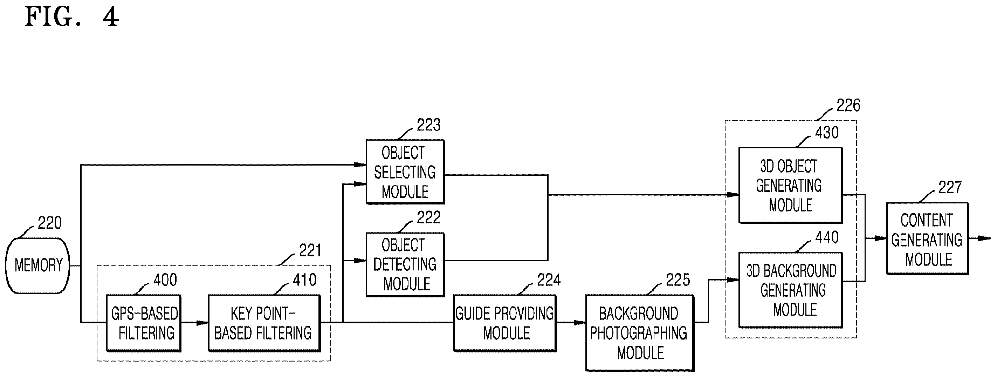

According to an embodiment of the disclosure, the electronic apparatus 100 may obtain the at least one image 111 by filtering a plurality of photographed images stored in the electronic apparatus 100 according to a preset condition. According to an embodiment of the disclosure, the plurality of photographed images may have been photographed in advance through the electronic apparatus 100 and stored in the electronic apparatus 100, or the plurality of photographed images may have been provided from an external server or a surrounding electronic apparatus to the electronic apparatus 100. According to an embodiment of the disclosure, the preset condition may be to filter at least one image photographed at adjacent locations based on global positioning system (GPS). The preset condition may be to extract a key point of each photographed image and filter at least one photographed image having the same key point. An operation 110 of obtaining the at least one image 111 by filtering the plurality of photographed images will be described with reference to FIG. 4, below.

According to an embodiment of the disclosure, the electronic apparatus 100 may obtain at least one object included in the at least one filtered image 111 (120). According to an embodiment of the disclosure, the electronic apparatus 100 may obtain at least one preset object 121 from the at least one image 111 (120). According to an embodiment of the disclosure, the at least one preset object 121 may include an object in which a user using the electronic apparatus 100 may be interested. According to an embodiment of the disclosure, in the case in which there are two or more images filtered from the plurality of photographed images, the at least one preset object may include an overlapping object included in all the two or more images. According to an embodiment of the disclosure, the preset object 121 may have been set in advance in a form of an object list.

According to an embodiment of the disclosure, the electronic apparatus 100 may obtain a selection signal of selecting at least one object 122 included in the at least one image 111. The electronic apparatus 100 may obtain the at least one object 122 included in the selection signal from the at least one image 111, based on the selection signal (120). According to an embodiment of the disclosure, the selection signal may be obtained from the user using the electronic apparatus 100, through a user interface included in the electronic apparatus 100. An operation 120 of obtaining at least one object from the at least one image 111 will be described with reference to FIGS. 4 to 5B, below.

According to an embodiment of the disclosure, the electronic apparatus 100 may provide a photographing guide 131 based on the at least one filtered image 111 to the user. According to an embodiment of the disclosure, the electronic apparatus 100 may display the photographing guide 131 based on the at least one image 111 through a display included in the electronic apparatus 100 to provide the photographing guide 131 to the user. According to an embodiment of the disclosure, the at least one image 111 may include a space corresponding to a background, and the photographing guide 131 may be a guide for providing the user with information such as a location of a reality space 132 corresponding to the space of the at least one image 111. According to an embodiment of the disclosure, the reality space 132 may be a space where the user using the electronic apparatus 100 is located.

According to an embodiment of the disclosure, the electronic apparatus 100 may obtain spatial information by photographing the reality space 132 corresponding to the photographing guide 131 through a camera included in the electronic apparatus 100, according to the displayed photographing guide 131 (130). According to an embodiment of the disclosure, the electronic apparatus 100 may obtain spatial information by photographing the reality space 132 corresponding to the space included in the at least one image 111, through the camera, according to the photographing guide 131 displayed on the display (130). An operation 130 of obtaining spatial information will be described with reference to FIGS. 4 and 6 to 7D, below.

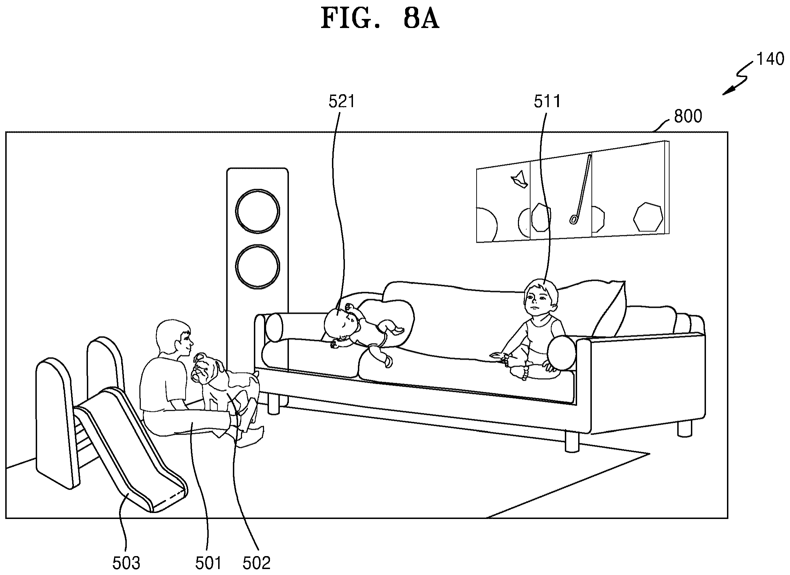

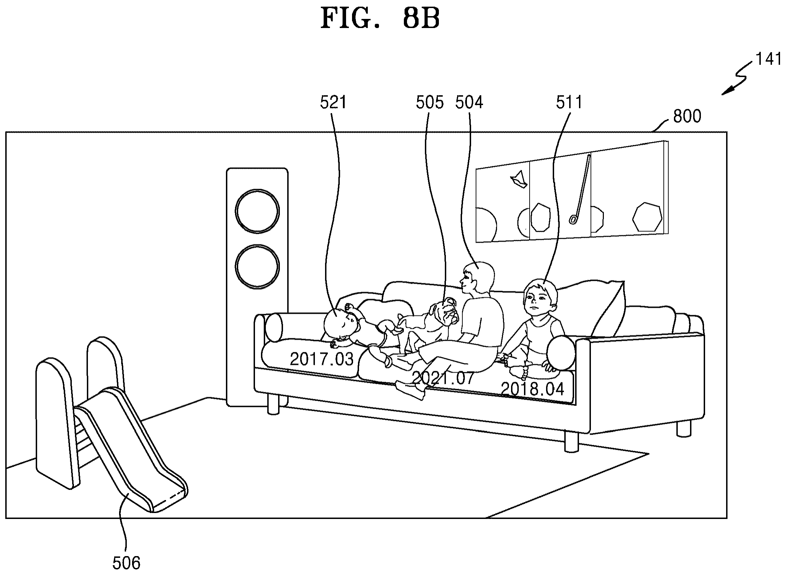

According to an embodiment of the disclosure, the electronic apparatus 100 may generate the content 140 based on the spatial information and the at least one object 121 and 122. According to an embodiment of the disclosure, the electronic apparatus 100 may generate the content 140 in which at least one 3D object is positioned in a 3D space based on the spatial information and the at least one object 121 and 122. According to an embodiment of the disclosure, the electronic apparatus 100 may generate a 3D space based on the spatial information. The electronic apparatus 100 may generate at least one 3D object respectively corresponding to the at least one object 121 and 122. The electronic apparatus 100 may generate the content 140 by positioning the at least one 3D object in the 3D space. An operation of generating content 140 will be described with reference to FIGS. 4, 8A, and 8B, below.

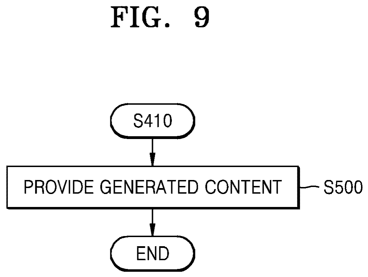

According to an embodiment of the disclosure, the electronic apparatus 100 may provide the content 140 to the user using the electronic apparatus 100. According to an embodiment of the disclosure, the electronic apparatus 100 may display the content 140 through the display to provide the content 140 to the user. According to an embodiment of the disclosure, in the case in which the content 140 includes a 3D space and at least one 3D object, the user may view the content 140 while changing a view at which the content 140 displayed on the electronic apparatus 100 is observed by moving the electronic apparatus 100. An operation of providing the content 140 to the user will be described with reference to FIGS. 9 to 11, below.

However, the disclosure is not limited thereto, and the electronic apparatus 100 may provide the content 140 to an external server or a surrounding electronic apparatus, and the user may receive the content 140 generated by the electronic apparatus 100 through another electronic apparatus.

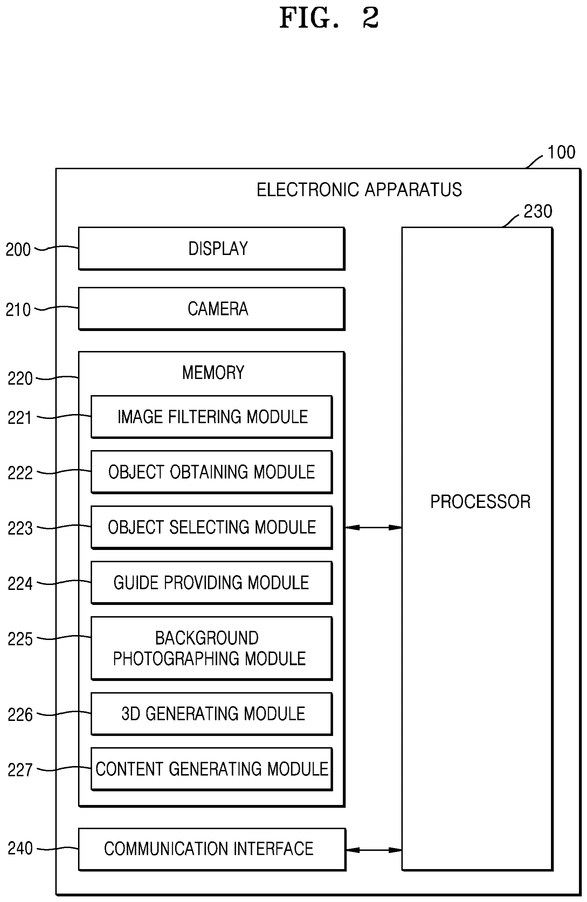

FIG. 2 is a block diagram showing a configuration of an electronic apparatus according to an embodiment of the disclosure.

Referring to FIGS. 1 and 2, the electronic apparatus 100 may include a display 200, a camera 210, a memory 220, at least one processor 230, and a communication interface 240. However, all components shown in FIG. 2 may not be essential components. The electronic apparatus 100 may be implemented by more or less components than those shown in FIG. 2. According to an embodiment of the disclosure, the electronic apparatus 100 may further include a user interface for obtaining a user's input.

According to an embodiment of the disclosure, the display 200, the camera 210, the memory 220, the at least one processor 230, and the communication interface 240 may be electrically and/or physically connected to each other.

According to an embodiment of the disclosure, the display 200 may display a photographing guide, or a photographing guide and content. The display 200 may include any one among a liquid crystal display, a plasma display, an organic light emitting diodes (OLED) display, or an inorganic light emitting diodes display. However, the disclosure is not limited to these, and the display 200 may include any other type of display capable of providing a user using the electronic apparatus 100 with a photographing guide and content.

According to an embodiment of the disclosure, the camera 210 may obtain an image by photographing the reality space 130. According to an embodiment of the disclosure, the camera 210 may include a RGB camera capable of obtaining an image including RGB information by photographing the reality space 130. According to an embodiment of the disclosure, the camera 210 may include a plurality of RGB cameras. The at least one processor 230 may obtain depth information by using images including RGB information, respectively photographed by the plurality of RGB cameras. The plurality of RGB cameras may respectively photograph the reality space 130 at different locations. The at least one processor 230 may obtain the depth information of the reality space 130 based on a positional relationship between the plurality of RGB cameras, distances between a plurality of pixels photographed the same location in the images respectively obtained by the plurality of RGB cameras, sizes of the pixels, etc. According to an embodiment of the disclosure, the camera 210 may include a stereo camera including two RGB cameras.

Also, the camera 210 may include a RGB-Depth camera that obtains an image including RGB information and depth information by photographing the reality space 130. According to an embodiment of the disclosure, the at least one processor 230 may display the reality space 132 photographed through the camera 210 on the display 200.

According to an embodiment of the disclosure, instructions, a data structure, and a program code, which are readable by the at least one processor 230, may be stored in the memory 220. According to an embodiment of the disclosure, the memory 220 may be one or more. According to an embodiment of the disclosure, operations that are performed by the at least one processor 230 may be implemented by executing instructions or codes of a program stored in the memory 220.

According to an embodiment of the disclosure, the memory 220 may include at least one among a flash memory type, a hard disk type, a multimedia card micro type, card type memory (for example, Secure Digital (SD) memory or eXtreme Digital (XD) memory), random access memory (RAM), static random access memory (SRAM), read-only memory (ROM), electrically erasable programmable read-only memory (EEPROM), programmable read-only memory (PROM), mask ROM, flash ROM, a hard disk drive (HDD), or a solid state drive (SSD). Instructions or a program code for performing functions or operations of the electronic apparatus 100 may be stored in the memory 220. Instructions, an algorithm, a data structure, a program code, and an application program stored in the memory 220 may be implemented with a programming or scripting language, such as, for example, C, C++, Java, and assembler.

According to an embodiment of the disclosure, an image filtering module 221, an object obtaining module 222, an object selecting module, a guide providing module 224, a background photographing module 225, a 3D generating module 226, and a content generating module 227 may be stored in the memory 220. However, all the modules shown in FIG. 2 may not be essential modules. More or less modules than those shown in FIG. 2 may be stored in the memory 220. Also, a plurality of photographed images may be stored in the memory 220.

According to an embodiment of the disclosure, a 'module' included in the memory 220 may mean a unit for processing a function or operation that is performed by the at least one processor 230. The 'module' included in the memory 220 may be embodied as software, such as instructions, an algorithm, a data structure, or a program code.

According to an embodiment of the disclosure, the image filtering module 221 may be configured with instructions or a program code related to an operation or function for obtaining at least one filtered image 111 by filtering a plurality of photographed images stored in the memory 220 according to a preset condition. The at least one processor 230 may execute the instructions or program code of the image filtering module 221 to filter the plurality of photographed images stored in the memory 220 according to the preset condition, thereby obtaining the at least one filtered image 111.

According to an embodiment of the disclosure, the image filtering module 221 may be configured with instructions or a program code for filtering a plurality of photographed images stored in the memory 220 into at least one image having GPS information of adjacent latitudes and longitudes, based on GPS information of the photographed images. The adjacent latitudes and longitudes may have been set in advance to latitudes and longitudes within hundreds of meters (m) or several kilometers (km) from a latitude and longitude of a specific location, although not limited thereto. The specific location may be a location with information of an overlapping latitude and longitude among latitudes and longitudes of the plurality of photographed images. Also, the specific location may be an latitude and longitude at which the electronic apparatus 100 is located. Hereinafter, a latitude and longitude are collectively referred to as a location, for convenience of description. The at least one processor 230 may execute the instructions or program code of the image filtering module 221 to obtain at least one image filtered to have adjacent location information based on GPS information of each of the plurality of photographed images stored in the memory 220.

According to an embodiment of the disclosure, the image filtering module 221 may be configured with instructions or a program code for extracting a key point of each of the plurality of photographed images stored in the memory 220 and filtering the plurality of photographed images into at least one image 111 having the same key point. The key point may be a part that may become a feature in the corresponding image, and include information about a relationship between a specific pixel and surrounding pixels in the image. The key point may be extracted based on information about brightness, colors, orientations, sizes, locations, etc. between the specific pixel and the surrounding pixels.

According to an embodiment of the disclosure, the image filtering module 221 may include Scale-Invariant Feature Transform (SIFT), Speeded Up Robust Features (SURF), Oriented and Rotated BRIEF (ORB), and Harris Corner Detector algorithms. Also, the image filtering module 221 may extract the key point of each of the plurality of photographed images by using a deep learning based model, such as Convolutional Neutral Network (CNN), Vision Transformer (ViT), Shifted window (Swin) Transformer, etc.

According to an embodiment of the disclosure, the image filtering module 221 may include an algorithm, such as K-means Clustering or K-Nearest Neighbors (K-NN). The image filtering module 221 may filter the plurality of photographed images into the at least one image 111 having the same key point through the above-stated algorithms.

According to an embodiment of the disclosure, the at least one processor 230 may execute the instructions or program code of the image filtering module 221 to extract the key point of each of the plurality of photographed images stored in the memory 220 and obtain the at least one image 111 having the same key point based on the extracted key point.

According to an embodiment of the disclosure, the object obtaining module 222 may be configured with instructions or a program code related to an operation or function for obtaining at least one object from the at least one image 111 stored in the memory 220. According to an embodiment of the disclosure, the object obtaining module 222 may include an algorithm for detecting an object included in the at least one image 111 from the at least one image 111. However, the disclosure is not limited thereto, and the object obtaining module 222 may include an algorithm for segmenting an object included in the at least one image 111 from the at least one image 111. The at least one processor 230 may execute an instruction, program code, or algorithm of the object obtaining module 222 to obtain an object from the at least one image 111 stored in the memory 220.

According to an embodiment of the disclosure, the object obtaining module 222 may be configured with instructions or a program code related to an operation or function for obtaining at least one preset object from the at least one image 111 stored in the memory 220, based on the at least one preset object. According to an embodiment of the disclosure, the at least one preset object may be stored in a form of an object list. The object obtaining module 222 may be configured with instructions or a program code related to an operation or function for obtaining at least one preset object from the at least one image 111 stored in the memory 220, based on the object list. The object list may have been set in advance to include a person (for example, parents), a pet, etc. However, the object list may include one or more objects. The at least one processor 230 may execute an instruction, program code or algorithm of the object obtaining module 222 to detect at least one object from the at least one image 111 stored in the memory 220. The at least one processor 230 may execute the instruction, program code or algorithm of the object obtaining module 222 to detect an object included in the object list from the at least one image 111 stored in the memory 220.

According to an embodiment of the disclosure, the object obtaining module 222 may be configured with instructions or a program code related to an operation or function for obtaining at least one object from the at least one image 111 filtered from the plurality of photographed images stored in the memory 220 by the image filtering module 221. The at least one processor 230 may execute the instruction, program code, or algorithm of the object obtaining module 222 to obtain at least one object from the at least one image 111 filtered from the plurality of photographed images stored in the memory 220.

According to an embodiment of the disclosure, the object selecting module 223 may be configured with instructions or a program code related to an operation or function for obtaining a selection signal generated by an operation of selecting an object included in at least one image, through the user interface. According to an embodiment of the disclosure, the object selecting module 223 may be configured with instructions or a program code related to an operation or function for obtaining a selection signal of selecting at least one object included in the at least one image 111 stored in the memory 220 and obtaining at least one object included in the selection signal from the at least one image 111 based on the obtained selection signal. The at least one processor 230 may execute an instruction, program code, or algorithm of the object selecting module 223 to obtain a selection signal generated by an operation of selecting at least one object included in at least one image through the user interface. The at least one processor 230 may obtain at least one object included in the selection signal from the at least one image, based on the obtained selection signal.

According to an embodiment of the disclosure, the object selecting module 223 may be configured with instructions or a program code related to an operation or function for obtaining a selection signal generated by an operation of selecting at least one object from the at least one image 111 filtered from the plurality of photographed images stored in the memory 220 by the image filtering module 221. According to an embodiment of the disclosure, the object selecting module 223 may be configured with instructions or a program code related to an operation or function for obtaining a selection signal of selecting at least one object included in the at least one image 111 filtered from the plurality of photographed images stored in the memory 220 and detecting the at least one object included in the selection signal from the at least one image 111 based on the obtained selection signal. The at least one processor 230 may detect the at least one object included in the selection signal from the at least one image 111, based on the selection signal.

However, the disclosure is not limited thereto, and the object selecting module 223 may be configured with instructions or a program code related to an operation or function for obtaining a selection signal generated by an operation of selecting an object included in at least one image or the at least one image 111 through the user interface, and an operation of obtaining at least one object included in the selection signal from the at least one image or the at least one image 111 based on the selection signal may be performed through the object obtaining module 222.

According to an embodiment of the disclosure, the guide providing module 224 may be configured with instructions or a program code related to an operation or function for providing a photographing guide 131 based on at least one image stored in the memory 220 or the at least one image 111 filtered from the plurality of photographed images stored in the memory 220. According to an embodiment of the disclosure, the guide providing module 224 may be configured with instructions or a program code related to an operation or function for displaying, on the display 200, the photographing guide 131 based on the at least one image stored in the memory 220 or the at least one image 111 filtered from the plurality of photographed images stored in the memory 220. The at least one processor 230 may execute an instruction, program code, or algorithm of the guide providing module 224 to provide the photographing guide 131 to a user. The at least one processor 230 may execute the instruction, program code, or algorithm of the guide providing module 224 to provide the photographing guide 131 to the user through the display 200. Hereinafter, for convenience of description, the photographing guide 131 is described as being provided to the user by being displayed on the display 200.

According to an embodiment of the disclosure, the at least one image or each of the plurality of photographed images may be displayed as the photographing guide 131 on the display 200. According to an embodiment of the disclosure, the photographing guide 131 may be translucently displayed on the display 200. According to an embodiment of the disclosure, a reality space 132 photographed by the camera 210 may be displayed on the display 200. The photographing guide 131 may be displayed on the display 200 so as to overlap with the reality space 132 displayed on the display 200. Because the photographing guide 131 is translucent, the photographing guide 131 may be displayed on the display 200 together with the reality space 132 with which the photographing guide 131 overlaps.

According to an embodiment of the disclosure, the at least one image or the at least one image filtered from the plurality of photographed images may include a plurality of images, and in this case, the photographing guide 131 may include a plurality of sub photographing guides respectively corresponding to the plurality of images. According to an embodiment of the disclosure, the guide providing module 224 may be configured with instructions or a program code related to an operation or function for sequentially displaying the plurality of sub photographing guides on the display 200.

According to an embodiment of the disclosure, the background photographing module 225 may be configured with instructions or a program code related to an operation or function for obtaining spatial information by photographing the reality space 132 corresponding to the photographing guide 131 according to the photographing guide 131 displayed on the display 200, through the camera 210. The at least one processor 230 may execute an instruction, program code, or algorithm of the background photographing module 225 to obtain spatial information by photographing the reality space 132 corresponding to the photographing guide 131. According to an embodiment of the disclosure, the spatial information may include RGB information, or RGB information and depth information, obtained by photographing a space. According to an embodiment of the disclosure, the spatial information may be information generated by photographing the reality space 132 corresponding to the photographing guide 131.

According to an embodiment of the disclosure, the background photographing module 225 may be configured with instructions or a program code related to an operation or function for obtaining, in the case in which at least one image or at least one filtered image is displayed as the photographing guide 131 on the display 200, spatial information by photographing a reality space 132 corresponding to a space included in the at least one image according to the photographing guide 131 through the camera 210. The at least one processor 230 may execute an instruction, program code, or algorithm of the background photographing module 225 to obtain spatial information generated by photographing the reality space 132 corresponding to the space included in the at least one image. The reality space 132 corresponding to the space included in the at least one image may be a part of a surrounding reality space where a user using the electronic apparatus 100 is located, and may mean a reality space corresponding to a space included in the at least one image in the surrounding reality space.

According to an embodiment of the disclosure, a plurality of sub photographing guides may be sequentially displayed on the display 200, and in this case, the at least one processor 230 may execute the instruction, program code, or algorithm of the background photographing module 225 to obtain spatial information including a plurality of pieces of sub spatial information generated by photographing reality spaces corresponding to spaces included in images respectively corresponding to the plurality of sub photographing guides according to the plurality of sub photographing guides sequentially displayed.

According to an embodiment of the disclosure, the 3D generating module 226 may be configured with instructions or a program code related to an operation or function for generating at least one 3D object corresponding to at least one object detected by the object obtaining module 222 or the object selecting module 223. According to an embodiment of the disclosure, the 3D generating module 226 may be configured with instructions or a program code related to an operation or function for generating a 3D space based on spatial information obtained by the background photographing module 225.

According to an embodiment of the disclosure, the 3D generating module 226 may include a model that generates a 3D model based on RGB information or RGB information and depth information included in spatial information. According to an embodiment of the disclosure, the 3D generating module 226 may include a Generative Adversarial Networks (GAN), Variational Auto-Encoder (VAE), a Diffusion model (for example, a SDFusion model) based on multi-modal, etc., although not limited to any one of these.

According to an embodiment of the disclosure, the at least one processor 230 may execute an instruction, program code, or algorithm of the 3D generating module 226 to generate at least one 3D object respectively corresponding to at least one object detected by the object obtaining module 222 or the object selecting module 223. The at least one processor 230 may execute the instruction, program code, or algorithm of the 3D generating module 226 to generate a 3D space corresponding to the obtained spatial information.

According to an embodiment of the disclosure, the content generating module 227 may be configured with instructions or a program code related to an operation or function for generating content 140 based on the obtained spatial information and the at least one detected object. According to an embodiment of the disclosure, the content generating module 227 may be configured with instructions or a program code related to an operation or function for generating the content 140 by positioning the at least one object in a space generated based on the spatial information. According to an embodiment of the disclosure, the content generating module 227 may be configured with instructions or a program code related to an operation or function for generating the content 140 by positioning at least one 3D object generated by the 3D generating module 226 in a 3D space generated by the 3D generating module 226. In this case, the content 140 generated by positioning the at least one 3D object in the 3D space may be 3D content including 3D information.

According to an embodiment of the disclosure, a content providing module may be stored in the memory 220. The content providing module may be configured with instructions or a program code related to an operation or function for displaying generated content on the display 200. According to an embodiment of the disclosure, the at least one processor 230 may execute instructions, program code, or algorithm of the content providing module to display generated content on the display 200.

According to an embodiment of the disclosure, the memory 220 may further store a control signal module configured with instructions or a program code related to an operation or function for obtaining a control signal including information about at least one of a location, shape, or size of at least one generated 3D object in a generated 3D space, through the user interface.

According to an embodiment of the disclosure, the content generating module 227 may include instructions or a program code related to an operation or function for generating the content 140 by setting at least one of the location, shape, or size of the at least one generated 3D object in the generated 3D space, based on the obtained control signal.

According to an embodiment of the disclosure, the at least one processor 230 may be configured with at least one among a Central Processing Unit (CPU), a microprocessor, a Graphic Processing Unit (GPU), an Application Processor (AP), Application Specific Integrated Circuits (ASICs), Digital Signal Processors (DSPs), Digital Signal Processing Devices (DSPDs), Programmable Logic Devices (PLDs), Field Programmable Gate Arrays (FPGAs), a Neural Processing Unit (NPU), or an Artificial Intelligence (AI) dedicated processor designed as a hardware structure specialized for learning and processing of an Al model, although not limited thereto.

According to an embodiment of the disclosure, when one or more processors included in the at least one processor 230 are artificial intelligence dedicated processors, the corresponding artificial intelligence dedicated processor may be designed as a hardware structure specialized for processing a specific artificial intelligence model.

According to an embodiment of the disclosure, the at least one processor 230 may be configured as circuitry such as a system on chip (SoC) or an integrated circuit (IC).

According to an embodiment, the at least one processor 230 may control the operation of the electronic device 100 that generates the content 140 by executing at least one instruction stored in the memory 220.

According to an embodiment of the disclosure, the at least one processor 230 may execute various types of modules stored in the memory 220. The at least one processor 230 may execute at least one instruction constituting various types of modules stored in the memory 220. By executing the program or at least one instruction stored in the memory 220, the at least one processor 230 may process data according to a predefined operation rule or an artificial intelligence model.

According to an embodiment of the disclosure, the at least one processor 230 may include a plurality of processors. According to an embodiment of the disclosure, at least one of the plurality of modules in the memory 220 may be executed by any one of the plurality of processors. The remaining modules among the plurality of modules stored in the memory 220 may be executed by another processor among the plurality of processors.

According to an embodiment of the disclosure, the communication interface 240 may perform data communication with an external server under a control by the at least one processor 230. Also, the communication interface 240 may perform data communication with other surrounding electronic apparatuses, as well as an external server.

According to an embodiment of the disclosure, the communication interface 240 may perform data communication with a server or other surrounding electronic apparatuses by using at least one among data communication methods including, for example, a wired local area network (LAN), a wireless LAN, Wireless-Fidelity (Wi-Fi), Bluetooth, Zigbee, Wi-Fi Direct (WFD), Infrared Data Association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Allicance (WiGig), and Radio Frequency (RF) communication.

According to an embodiment of the disclosure, the at least one processor 230 may receive a plurality of photographed images from an external server or surrounding electronic apparatuses through the communication interface 240. The at least one processor 230 may provide the generated content 140 to the external server or the surrounding electronic apparatuses through the communication interface 240.

According to an embodiment of the disclosure, the electronic apparatus 100 may further include a user interface. According to an embodiment of the disclosure, the user interface may include a touch portion, a push button, a voice recognizer, a motion recognizer, etc. According to an embodiment of the disclosure, the electronic apparatus 100 may obtain a user input provided from a user through the user interface. According to an embodiment of the disclosure, the electronic apparatus 100 may obtain a user input from a user who touches/presses the user interface, provides a voice, or makes a motion such as a gesture. According to an embodiment of the disclosure, the user may additionally register a new object in the object list or delete an object included in the object list, through the user interface. Also, the user may provide an input of selecting at least one object to be detected from at least one image, to the electronic apparatus 100, through the user interface. The electronic apparatus 100 may generate and obtain a selection signal including information for selecting the at least one object to be detected from the at least one image, based on the user input provided through the user interface.

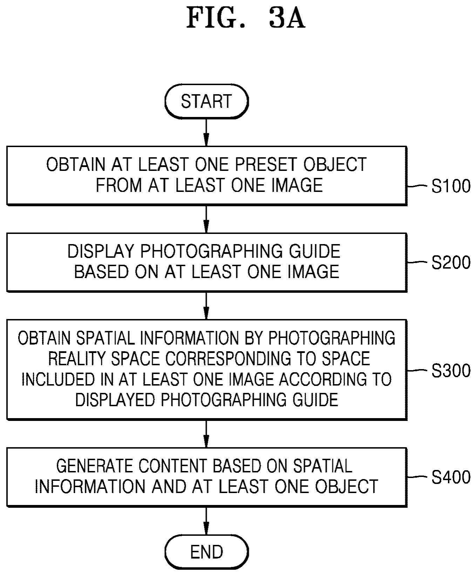

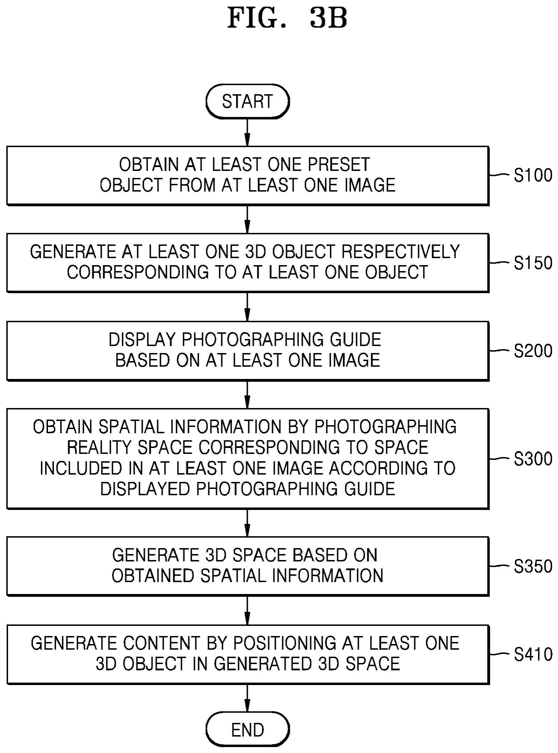

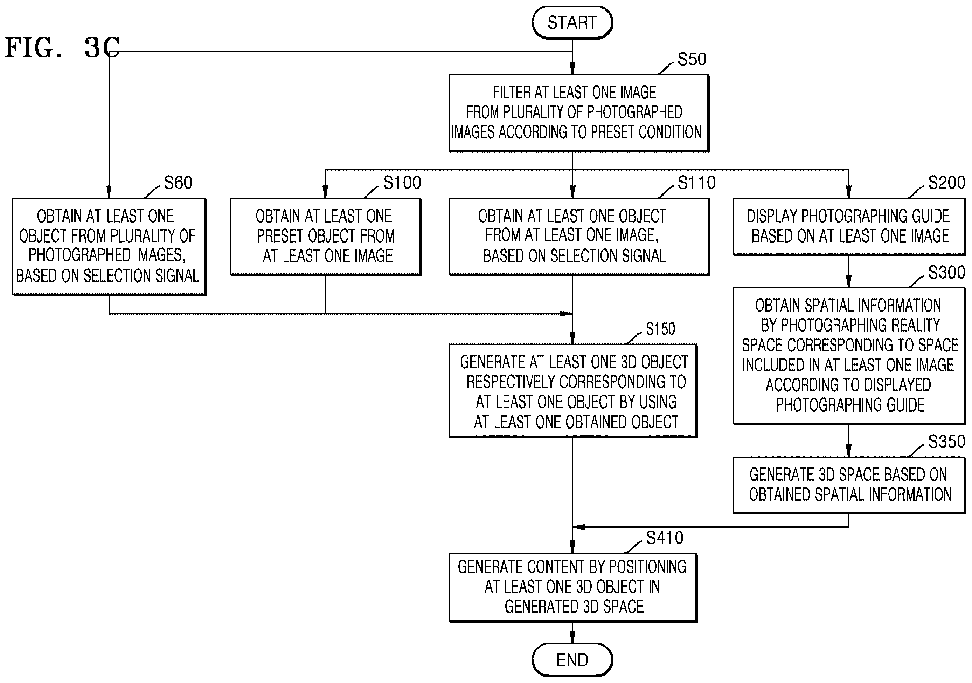

FIG. 3A is a flowchart illustrating an operation method of an electronic apparatus, according to an embodiment of the disclosure. FIG. 3B is a flowchart illustrating an operation method of generating content by generating a 3D object and a 3D space and positioning the 3D object in the 3D space in an electronic apparatus, according to an embodiment of the disclosure. FIG. 3C is a flowchart illustrating an operation of filtering at least one image from a plurality of photographed images and obtaining at least one object based on a selection signal, according to an embodiment of the disclosure.

Referring to FIGS. 1, 2, and 3A, according to an embodiment of the disclosure, an operation method of the electronic apparatus 100 may include an operation S100 of obtaining at least one preset object 121 from at least one image 111. According to an embodiment of the disclosure, in the operation S100 of obtaining at least one object 121 from the at least one image 111, the at least one processor 230 may execute the instructions or program code of the object obtaining module 222 to detect the at least one object 121 included in an object list from the at least one image 111. The at least one preset object 121 or the object list may have been photographed in advance by the camera 210 included in the electronic apparatus 100 and then stored in the memory 220, or the at least one preset object 121 or the object list may have been provided from an external server or a surrounding electronic apparatus through the communication interface 240 and then stored in the memory 220.

According to an embodiment of the disclosure, the operation method of the electronic apparatus 100 may include an operation S200 of displaying a photographing guide 131 based on the at least one image 111 through the display 200. According to an embodiment of the disclosure, in the operation S200 of displaying the photographing guide 131, the at least one processor 230 may execute the instructions or program code of the guide providing module 224 to display the photographing guide 131 on the display 200.

According to an embodiment of the disclosure, the operation method of the electronic apparatus 100 may include an operation S300 of obtaining spatial information by photographing a reality space 132 corresponding to a space included in the at least one image 111 according to the photographing guide 131, through the camera 210. According to an embodiment of the disclosure, in the operation S300 of obtaining the spatial information, the at least one processor 230 may execute the instructions or program code of the background photographing mode 225 to obtain spatial information generated by corresponding the photographing guide 131 displayed on the display 200 to the reality space 132 that is to be photographed through the camera 210 and then photographing the corresponding space.

According to an embodiment of the disclosure, the operation method of the electronic apparatus 100 may include an operation S400 of generating content 140 based on the spatial information and the at least one object 121. According to an embodiment of the disclosure, in the operation S400 of generating content 140, the at least one processor 230 may execute the instructions or program code of the content generating module 227 to generate the content 140 by modeling a space based on the spatial information and positioning the at least one object 121 in the modeled space.

FIG. 3B illustrates an operation method of the electronic apparatus 100 of generating content by using a 3D object generated by using at least one obtained object and a 3D space generated based on obtained spatial information, according to an embodiment of the disclosure. Hereinafter, the same operations as those described above with reference to FIG. 3A are assigned the same reference numerals as those assigned to the operations described above with reference to FIG. 3A, and overlapping descriptions thereof will be omitted.

Referring to FIGS. 2, 3A, and 3B, the operation method of the electronic apparatus 100 may include an operation S150 of generating at least one 3D object respectively corresponding to at least one object obtained in the operation S100 of obtaining the at least one object 121. According to an embodiment of the disclosure, in the operation S150 of generating at least one 3D object, the at least one processor 230 may execute the instructions or program code of the 3D generating module 226 to generate at least one 3D object respectively corresponding to the at least one object 121.

According to an embodiment of the disclosure, the operation method of the electronic apparatus 100 may include an operation S350 of generating a 3D space based on the spatial information obtained in the operation S300 of obtaining the spatial information. According to an embodiment of the disclosure, in the operation 350 of generating the 3D space, the at least one processor 230 may execute the instructions or program code of the 3D generating module 226 to generate the 3D space based on the spatial information. According to an embodiment of the disclosure, the at least one processor 230 may generate a 3D space based on spatial information including RGB information or RGB information and depth information according to a kind of the camera 210 by using the 3D generating module 226.

According to an embodiment of the disclosure, the operation method of the electronic apparatus 100 may include an operation S410 of generating content by positioning the at least one generated 3D object in the generated 3D space. According to an embodiment of the disclosure, in the operation S400 of generating the content based on the spatial information and the detected object, the content may be generated by positioning the 3D object generated in the operation S150 of generating the 3D object in the 3D space generated in the operation S350 of generating the 3D space. In this case, the content in which the 3D object is positioned in the 3D space may be 3D content including 3D information. According to an embodiment of the disclosure, in the operation S410 of generating the content by positioning the at least one generated 3D object in the generated 3D space, the at least one processor 230 may execute the instructions or program code of the content generating module 227 to generate the content by positioning the generated 3D object in the generated 3D space.

FIG. 3C illustrates an operation method of the electronic apparatus 100 of filtering at least one image from a plurality of photographed images according to a preset condition and obtaining an object included in a selection signal of selecting an object from the at least one image, according to an embodiment of the disclosure. Hereinafter, the same operations as those described above with reference to FIGS. 3A and 3B are assigned the same reference numerals as those assigned to the operations described above with reference to FIGS. 3A and 3B, and overlapping descriptions thereof will be omitted.

Referring to FIGS. 2, 3B, and 3C, the operation method of the electronic apparatus 100 may include an operation S50 of filtering at least one image from a plurality of photographed images stored in the memory 220 according to a preset condition. According to an embodiment of the disclosure, the plurality of photographed images may have been photographed in advance through the camera 210 and then stored in the memory 220. Also, the plurality of photographed images may have been provided from an external server or surrounding electronic apparatuses and then stored in the memory 220. According to an embodiment of the disclosure, the at least one processor 230 may execute the instructions or program code of the image filtering module 221 to filter at least one image from the plurality of photographed images according to a preset condition.

According to an embodiment of the disclosure, the preset condition may be a condition for filtering at least one image photographed at adjacent locations from the plurality of photographed images. A location at which each of the plurality of photographed images has been photographed may be obtained by using GPS information, etc. Also, the preset condition may be a condition for filtering at least one image including the same key point from the plurality of photographed images.

According to an embodiment of the disclosure, the operation S50 of filtering the at least one image from the plurality of photographed images according to the preset condition may include an operation of filtering the plurality of photographed images into at least one image having adjacent locations based on GPS information of each of the plurality of photographed images. The operation S50 of filtering the at least one image from the plurality of photographed images according to the preset condition may include an operation of filtering the plurality of photographed images into at least one image having the same key point based on a key point of each of the plurality of photographed images.

According to an embodiment of the disclosure, the operation of filtering the plurality of photographed images based on key points may be performed after the operation of filtering the plurality of photographed images based on GPS information. According to an embodiment of the disclosure, the at least one processor 230 may filter the plurality of photographed images into a plurality of images having adjacent locations based on GPS information and then filter the plurality of filtered images based on key points into at least one image having the same key point. However, the disclosure is not limited thereto, and the operation S50 of filtering the at least one image from the plurality of photographed images according to the preset condition may be filtering based on GPS information or filtering based on key points.

According to an embodiment of the disclosure, the operation method of the electronic apparatus 100 may include an operation of obtaining a selection signal of selecting at least one object included in a plurality of photographed images. The operation method of the electronic apparatus 100 may include an operation S60 of obtaining the at least one object included in the selection signal from the plurality of photographed images, based on the selection signal. According to an embodiment of the disclosure, the at least one processor 230 may execute the instructions or program code of the object selecting module 223 to obtain a selection signal generated according to a user's input of selecting at least one object included in a plurality of photographed images, through the user interface. According to an embodiment of the disclosure, the selection signal may include information about the at least one object selected by the user. The at least one object included in the selection signal may be at least one preset object or an object not included in the object list. However, the disclosure is not limited thereto, and the at least one object included in the selection signal may be the same as at least one preset object or an object included in the object list.

According to an embodiment of the disclosure, in the operation S60 of obtaining the at least one object included in the selection signal, the at least one processor 230 may execute the instructions or program code of the object obtaining module 222 or the object selecting module 223 to obtain at least one object included in the selection signal from the plurality of photographed images.

According to an embodiment of the disclosure, the operation method of the electronic apparatus 100 may include an operation of obtaining a selection signal of selecting at least one object included in at least one image filtered in the operation S50 of filtering the at least one image. The operation method of the electronic apparatus 100 may include an operation S110 of obtaining the at least one object included in the selection signal from the at least one filtered image, based on the selection signal. According to an embodiment of the disclosure, the at least one processor 230 may execute the instructions or program code of the object selecting module 223 to obtain a selection signal generated according to a user's input of selecting at least one object included in the at least one filtered image, through the user interface.

According to an embodiment of the disclosure, in the operation S150 of generating the at least one 3D object, the at least one processor 230 may generate a 3D object corresponding to the at least one object included in the selection signal, obtained from the plurality of photographed images. The at least one processor 230 may generate a 3D object corresponding to the at least one object included in the selection signal, obtained from the at least one filtered image. The at least one processor 230 may generate a 3D object corresponding to at least one preset object or at least one object included in the object list, obtained from the at least one filtered image.

According to an embodiment of the disclosure, in the operation S410 of generating the content, the content may be generated by positioning the 3D object generated in the operation S150 of generating the at least one 3D object in the generated 3D space.

According to an embodiment of the disclosure, the operation method of the electronic apparatus 100 may include an operation of obtaining a control signal including information about at least one of a location, shape, or size of the 3D object generated in the operation S150 of generating the 3D object in the 3D space generated in the operation S350 of generating the 3D space. According to an embodiment of the disclosure, the control signal may be a signal generated by a user input of positioning the 3D object in the 3D space or adjusting a shape or size of the 3D object through the user interface.

According to an embodiment of the disclosure, in the operation S410 of generating the content, the content may be generated by setting at least one of a location, shape, or size of the at least one generated 3D object in the generated 3D space, based on the obtained control signal.

Hereinafter, for convenience of description, an operation of the electronic apparatus 100 that operates by the method shown in FIG. 3C will be described with reference to FIGS. 4 to 8B. However, the disclosure is not limited thereto.

FIG. 4 is a view for describing an operation of an electronic apparatus according to an embodiment of the disclosure. Hereinafter, the same components as those described above with reference to FIG. 2 are assigned the same reference numerals as those assigned to the components described above with reference to FIG. 2, and overlapping descriptions thereof will be omitted.

Referring to FIGS. 2, 3C, and 4, according to an embodiment of the disclosure, the at least one processor 230 may execute the instructions or program code of the image filtering module 221 to filter a plurality of photographed images stored in the memory 220 according to a preset condition. According to an embodiment of the disclosure, the memory 220 may be a gallery that stores a plurality of photographed images photographed in advance. According to an embodiment of the disclosure, the image filtering module 221 may include a GPS-based filtering module 400 configured with instructions or a program code related to an operation or function for filtering a plurality of photographed images into at least one image photographed at adjacent locations based on GPS. The image filtering module 221 may include a key point-based filtering module 410 configured with instructions or a program code related to an operation or function for filtering a plurality of photographed images into at least one image having the same key point based on key points.

According to an embodiment of the disclosure, the at least one processor 230 may execute the instructions or program code of the GPS-based filtering module 400 to filter a plurality of photographed images into a plurality of images photographed at adjacent locations based on GPS. The at least one processor 230 may execute the instructions or program code of the key point-based filtering module 410 to filter the plurality of photographed images filtered based on GPS into at least one image having the same key point. FIG. 4 shows an operation of filtering a plurality of photographed images by the GPS-based filtering module 400 and then filtering the filtered images by the key point-based filtering module 410. However, the disclosure is not limited thereto. The image filtering module 221 may include any one module among the GPS-based filtering module 400 and the key point-based filtering module 410, and change the order of operations that are performed by the GPS-based filtering module 400 and the key point-based filtering module 410.

According to an embodiment of the disclosure, the at least one processor 230 may execute the instructions or program code of the object obtaining module 223 to obtain at least one object included in at least one preset object from at least one image filtered by the image filtering module 221.

According to an embodiment of the disclosure, the at least one processor 230 may execute the instructions or program code of the object selecting module 223 to obtain at least one object included in a selection signal from a plurality of photographed images stored in the memory 220 or at least one image filtered by the image filtering module 221.

According to an embodiment of the disclosure, the at least one processor 230 may execute the instructions or program code of the guide providing module 224 to display a photographing guide based on the at least one image filtered by the image filtering module 221 on the display 200. According to an embodiment of the disclosure, the at least one processor 230 may translucently display the at least one filtered image as a photographing guide 131 on the display 200.

According to an embodiment of the disclosure, the at least one processor 230 may execute the instructions or program code of the background photographing module 225 to obtain spatial information by photographing a space corresponding to the photographing guide 131 in a reality space displayed on the display 200 through the camera 210 according to the photographing guide 131 displayed on the display 200. According to an embodiment of the disclosure, the at least one filtered image may be displayed as the photographing guide 131 on the display 200, and in this case, a reality space corresponding to the photographing guide 131 in a surrounding reality space displayed on the display 200 may be a space corresponding to a space included in the at least one filtered image.

According to an embodiment of the disclosure, the at least one processor 230 may execute the instructions or program code of the 3D generating module 226 to generate at least one 3D object corresponding to the at least one obtained object. The at least one processor 230 may execute the instructions or program code of the 3D generating module 226 to generate a 3D space based on the obtained spatial information.

According to an embodiment of the disclosure, the 3D generating module 226 may include a 3D object generating module 430 configured with instructions or a program code related to an operation or function for generating a 3D object corresponding to at least one obtained object. The 3D generating module 226 may include a 3D background generating module 440 configured with instructions or a program code related to an operation or function for generating a 3D space based on obtained spatial information. According to an embodiment of the disclosure, the at least one processor 230 may execute the instructions or program code of the 3D object generating module 430 to generate at least one 3D object corresponding to at least one obtained object. The at least one processor 230 may execute the instructions or program code of the 3D background generating module 440 to generate a 3D space based on obtained spatial information. However, the disclosure is not limited thereto, and a 3D object and a 3D space may be generated by a single module.

According to an embodiment of the disclosure, the at least one processor 230 may execute the instructions or program code of the content generating module 227 to generate content by positioning the at least one generated 3D object in the generated 3D space. According to an embodiment of the disclosure, a location, shape, and size of at least one 3D object in a 3D space may depend on a location, shape, and size of at least one obtained object in a space of an image including the object. According to an embodiment of the disclosure, the at least one processor 230 may generate content by positioning a 3D object in a 3D space according to a location, shape, and size of at least one obtained object in a space of an image including the object.

According to an embodiment of the disclosure, according to reception of a control signal, the at least one processor 230 may generate content by setting at least one of a location, shape or size of a 3D object in a 3D space based on the control signal and positioning the 3D object in the 3D space. In the case of information not included in the control signal, a 3D object may be positioned based on information about a location, shape, and size of at least one obtained object in a space of an image including the object.

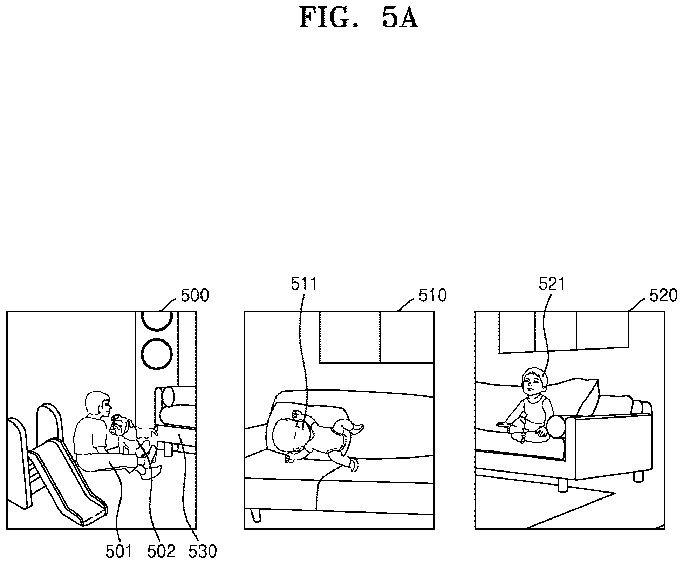

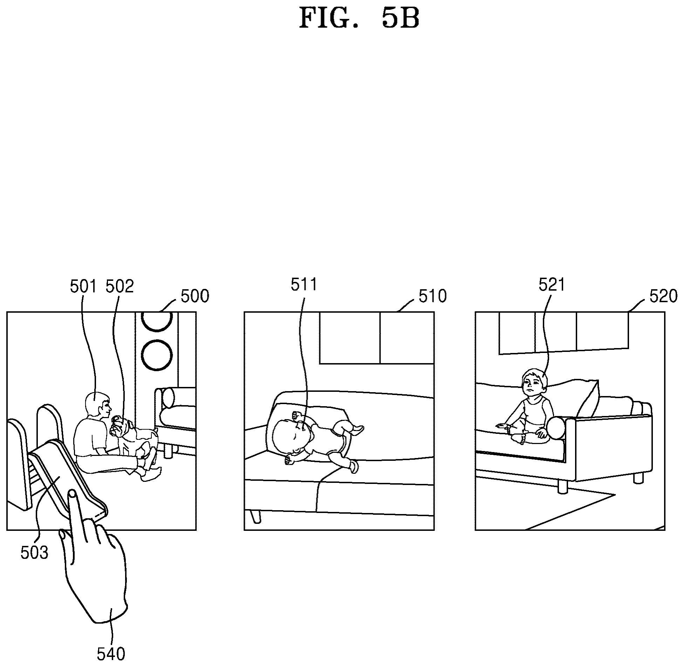

FIG. 5A is a view for describing an operation of obtaining at least one object included in an object list from at least one image, according to an embodiment of the disclosure. FIG. 5B is a view for describing an operation of obtaining at least one object included in a selection signal from at least one image, according to an embodiment of the disclosure.

Referring to FIGS. 2, 4, and 5A, according to an embodiment of the disclosure, FIG. 5A shows at least one image filtered through the image filtering module 221. According to an embodiment of the disclosure, the at least one image may include a plurality of images. In FIG. 5A, three images of a first image 500, a second image 510, and a third image 520 are shown, however, the disclosure is not limited thereto. Two images or four or more images may be filtered from a plurality of photographed images stored in the memory 220, according to kinds of the plurality of photographed images and a preset condition.

According to an embodiment of the disclosure, the first image 500, the second image 510, and the third image 520 may be images having information of adjacent GPS locations, obtained by being filtered from the plurality of photographed images. The first image 500, the second image 510, and the third image 520 may be images obtained by being filtered into images having information of adjacent GPS locations from the plurality of photographed images and then filtered into images having the same key point.

According to an embodiment of the disclosure, the first image 500, the second image 510, and the third image 530 may be images having positional information of locations within tens of meters (m) or hundreds of meters (m) from a specific location (for example, 'home'). Also, the first image 500, the second image 510, and the third image 530 may be images having the same key point (for example, 'sofa'). Thereby, the first image 500, the second image 510, and the third image 530 photographed in the same space (for example, 'space where a sofa is positioned in home') may be filtered from among the plurality of photographed images.

According to an embodiment of the disclosure, at least one preset object may include an object determined to attract the attention of a user using the electronic apparatus 100. According to an embodiment of the disclosure, the at least one preset object may be set differently depending on preset criterion used to filter the plurality of photographed images. According to an embodiment of the disclosure, the at least one preset object may include an object corresponding to a specific location based on GPS information. The at least one preset object may include an object corresponding to a key point based on key point information.

According to an embodiment of the disclosure, upon filtering of the plurality of photographed images into images having GPS information of locations adjacent to a location of 'home', the at least one preset object may include an object determined to attract the user's attention in the 'home'. According to an embodiment of the disclosure, the at least one preset object may be set to include 'person', 'picture', 'pet', etc. However, the disclosure is not limited thereto, and the at least one preset object may change in correspondence to a specific location that is criterion of filtering. According to an embodiment of the disclosure, upon filtering of the plurality of photographed images into images having GPS information of locations adjacent to 'park', the at least one preset object may include an object determined to attract the user's attention in the 'park'. According to an embodiment of the disclosure, the at least one preset object may be set to include 'person', 'tree', 'pet', 'playground', 'soccer ball', etc.

According to an embodiment of the disclosure, upon filtering of the plurality of photographed images based on images having the same key point as 'sofa', the at least one preset object may include an object determined to attract the user's attention in the 'sofa'. According to an embodiment of the disclosure, the at least one preset object may be set to include 'person sitting on the sofa', 'pet sitting on the sofa', 'person around the sofa', 'pet around the sofa', etc. However, the disclosure is not limited thereto, and the at least one preset object may change in correspondence to a key point that is criterion of filtering. According to an embodiment of the disclosure, upon filtering of the plurality of photographed images based on the same key point as 'table', the at least one preset object may include an object determined to attract the user's attention in the 'table'. According to an embodiment of the disclosure, the at least one preset object may be set to include 'person', 'food', 'cup', 'vase', etc.

However, the disclosure is not limited thereto, and the at least one preset object may be set to include 'person', 'picture', 'pet', etc. regardless of GPS information or key point information.

According to an embodiment of the disclosure, a first person 501 and a pet 502 may be obtained from the first image 500 through the object obtaining module 222. In this case, a sofa 530 may not be obtained from the first image 500 because the sofa 530 is not included in at least one preset object. According to an embodiment of the disclosure, a second person 511 may be obtained from the second image 510 through the object obtaining module 222. A third person 521 may be obtained from the third image 520 through the object obtaining module 222.

According to an embodiment of the disclosure, the plurality of photographed images may have been photographed on different dates or at different views. Accordingly, although the first person 501, the second person 511, and the third person 521 respectively detected from the first image 500, the second image 510, and the third image 520 filtered from the plurality of photographed images are the same person, ages, poses, and clothes of the first person 501, the second person 511, and the third person 521 may be different from each other. According to an embodiment of the disclosure, a date on which the first image 500 has been photographed may be the latest date, a date on which the third image 520 has been photographed may be the oldest date, and a date on which the second image 510 has been photographed may be a date between the date on which the first image 500 has been photographed and the data on which the third image 520 has been photographed. According to an embodiment of the disclosure, in the case in which the first person 501, the second person 511, and the third person 521 are the same person, the first person 501 may be at the oldest age, the third person 521 may be at the youngest age, and the second person 511 may be at a middle age between the age of the first person 510 and the age of the third person 521.

According to an embodiment of the disclosure, by obtaining the same person located in the same space from the first image 500, the second image 510, and the third image 520 filtered from a plurality of photographed images photographed over time and stored in the memory 220, changes of the person over time may be provided to the user.

Also, the first image 500, the second image 510, and the third image 520 may have been photographed at different views, and in this case, objects of the same person having various poses in the same space may be obtained.

According to an embodiment of the disclosure, the first image 500, the second image 510, and the third image 520 may be different persons, and in this case, by obtaining the different persons that have been located in the same space, memories of various persons in the corresponding space may be provided to the user.

Referring to FIG. 5B, the first image 500, the second image 510, and the third image 520 are shown, according to an embodiment of the disclosure. As shown in FIG. 5B, the first person 501 and the pet 502 included in the first image 500 may be obtained, the second person 511 included in the second image 510 may be obtained, and the third person 521 included in the third image 520 may be obtained. Also, FIG. 5B shows a case in which a ride 503 included in the first image 500 is further obtained, compared to FIG. 5A.

According to an embodiment of the disclosure, the ride 503 may be an object included in a selection signal generated by a user's input 540 of selecting the ride 503 in the first image 500. According to an embodiment of the disclosure, the electronic apparatus 100 may generate a selection signal by receiving an input of selecting the ride 503 in the first image 500, through the user interface. The electronic apparatus 100 may obtain the ride 503 from the first image 500 based on the selection signal. According to an embodiment of the disclosure, in the case in which the ride 503 is not obtained from the first image 500 because the ride 503 is not included in the preset object, the user may provide a user input of selecting the ride 503 to obtain the ride 503 from the first image 500.

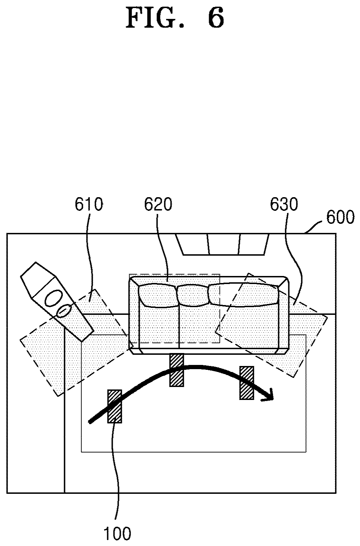

FIG. 6 is a view for describing an operation of obtaining spatial information according to a photographing guide, according to an embodiment of the disclosure.

Referring to FIGS. 2, 4, and 6, according to an embodiment of the disclosure, a plurality of photographing guides 610, 620, and 630 (also, referred to as a first sub photographing guide 610, a second sub photographing guide 620, and a third sub photographing guide 630) provided through a surrounding reality space 600 and the guide providing module 224 are shown in FIG. 6. The surrounding reality space 600 may be a space where a user using the electronic apparatus 100 is located. The surrounding reality space 600 may be a space that is adjacent to the user using the electronic apparatus 100.

According to an embodiment of the disclosure, the user may photograph the surrounding reality space 600 using the electronic apparatus 100. According to an embodiment of the disclosure, the user may photograph the surrounding reality space 600 through the camera 210. At this time, a part of the surrounding reality space 600 photographed through the camera 210 may be displayed on the display 200. The user may change a position of the electronic apparatus 100 to change a reality space that is displayed on the display 200 in the surrounding reality space 600. In the case in which a desired reality space in the surrounding reality space 600 is displayed on the display 200, the user may obtain spatial information by photographing the corresponding reality space through the camera 210.

According to an embodiment of the disclosure, the photographing guides 610, 620, and 630 may be displayed on the display 200. According to an embodiment of the disclosure, the photographing guides 610, 620, and 630 may be guides for providing the user with information (that is, spatial information) about a space in which at least one image has been photographed. According to an embodiment of the disclosure, the photographing guides 610, 620, and 630 may be displayed as at least one translucent image. Hereinafter, images corresponding to the photographing guides 610, 620, and 630 may be at least one image filtered from among a plurality of photographed images.

According to an embodiment of the disclosure, at least one image filtered from the plurality of photographed images may include a plurality of images, and in this case, the photographing guides 610, 620, and 630 may include a plurality of sub photographing guides respectively corresponding to the plurality of images. According to an embodiment of the disclosure, each of the plurality of sub photographing guides may include information about a space of each of the plurality of images.

According to an embodiment of the disclosure, FIG. 6 shows three sub photographing guides 610, 620, and 630. However, the disclosure is not limited thereto, and the number of the sub photographing guides may depend on the number of a plurality of filtered images.

According to an embodiment of the disclosure, the first sub photographing guide 610, the second sub photographing guide 620, and the third sub photographing guide 630 may be displayed on the display 200 included in the electronic apparatus 100. According to an embodiment of the disclosure, FIG. 6 shows the first sub photographing guide 610, the second sub photographing guide 620, and the third sub photographing guide 630 displayed on the display 200 to obtain spatial information of three images filtered from a reality space of at least a part of the surrounding reality space 600 displayed on the display 200 by photographing the surrounding reality space 600 through the camera 210 while changing a location of the electronic apparatus 100 or a photographing view of the camera 210. According to an embodiment of the disclosure, the first sub photographing guide 610, the second sub photographing guide 620, and the third sub photographing guide 630 may be displayed on the display 200 at different locations of the electronic apparatus 100 or at different photographing views of the camera 210.

According to an embodiment of the disclosure, the electronic apparatus 100 may obtain spatial information generated by photographing a reality space corresponding to a space included in each of filtered images respectively corresponding to the first sub photographing guide 610, the second sub photographing guide 620, and the third sub photographing guide 630 in the surrounding reality space 600 according to the first sub photographing guide 610, the second sub photographing guide 620, and the third sub photographing guide 630 through the camera 210. According to an embodiment of the disclosure, the spatial information may include first sub spatial information corresponding to a space (for example, a space including an air conditioner and a left side of a sofa) included in the filtered image corresponding to the first sub photographing guide 610. The spatial information may include second sub spatial information corresponding to a space (for example, a space including a center of the sofa) included in the filtered image corresponding to the second sub photographing guide 620. The spatial information may include third sub spatial information corresponding to a space (for example, a space including a right side of the sofa) included in the filtered image corresponding to the third sub photographing guide 630.

According to an embodiment of the disclosure, the electronic apparatus 100 may generate a 3D space based on the obtained spatial information. According to an embodiment of the disclosure, the spatial information may include information about reality spaces corresponding to the spaces included in the filtered images respectively corresponding to the first sub photographing guide 610, the second sub photographing guide 620, and the third sub photographing guide 630 in the surrounding reality space 600. The electronic apparatus 100 may generate a 3D space corresponding to a space included in at least one filtered image based on the obtained spatial information.

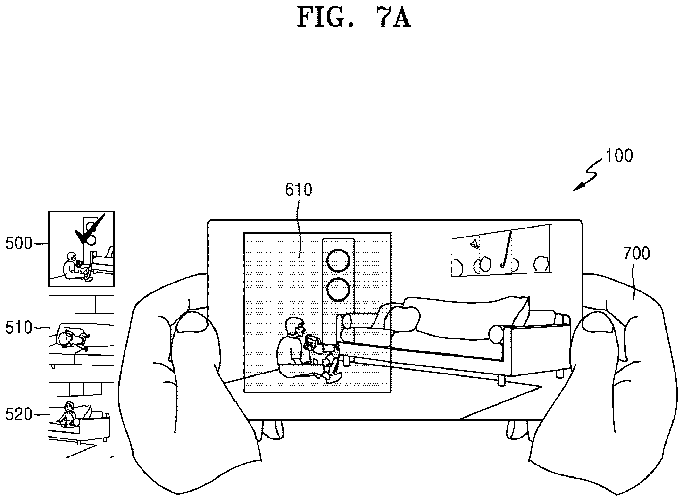

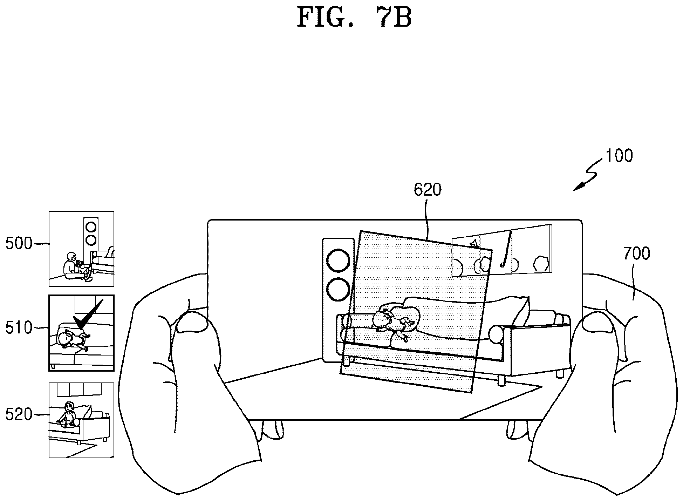

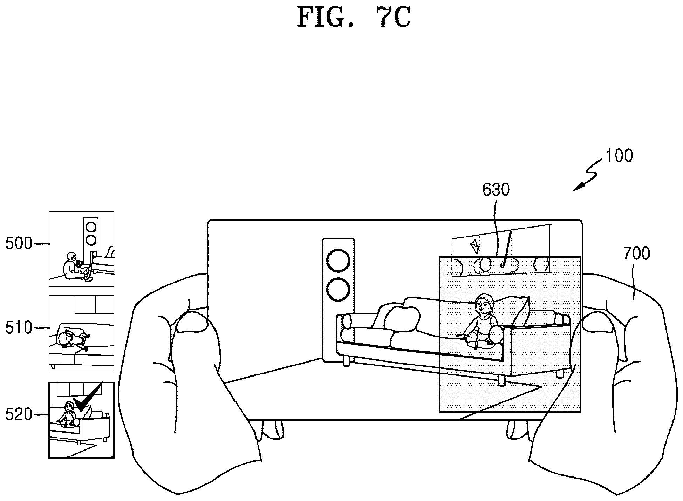

FIG. 7A is a view for describing an operation of obtaining spatial information by photographing a reality space according to a photographing guide displayed on a display, according to an embodiment of the disclosure. FIG. 7B is a view for describing an operation of obtaining spatial information by photographing a reality space according to a photographing guide displayed on a display, according to an embodiment of the disclosure. FIG. 7C is a view for describing an operation of obtaining spatial information by photographing a reality space according to a photographing guide displayed on a display, according to an embodiment of the disclosure.

Referring to FIGS. 2, 4, 5A, 6, and 7A, according to an embodiment of the disclosure, FIG. 7A shows the electronic apparatus 100, three images (that is, the first, second, and third images 500, 510, and 520) filtered through the image filtering module 221, the first sub photographing guide 610 based on the first image 500, and a user 700 using the electronic apparatus 100.

According to an embodiment of the disclosure, filtered images may be a plurality of images, and in this case, a photographing guide may include a plurality of sub photographing guides respectively corresponding to the plurality of images. The at least one processor 230 may execute the instructions or program code of the guide providing module 224 to sequentially display the plurality of sub photographing guides on the display 200. The at least one processor 230 may obtain sub spatial information generated by photographing, according to any sub photographing guide among the plurality of sub photographing guides sequentially displayed on the display 200, a reality space corresponding to a space included in an image corresponding to the sub photographing guide in the surrounding reality space 600, through the camera 210.

According to an embodiment of the disclosure, the at least one processor 230 may sequentially display, on the display 200, the first sub photographing guide 610, the second sub photographing guide 620, and the third sub photographing guide 630 respectively corresponding to the first image 500, the second image 510, and the third image 520. The user 700 may photograph reality spaces respectively corresponding to the first sub photographing guide 610, the second sub photographing guide 620, and the third sub photographing guide 630 in the surrounding reality space 600, according to the first sub photographing guide 610, the second sub photographing guide 620, and the third sub photographing guide 630 sequentially displayed on the display 200. The electronic apparatus 100 may obtain a plurality of pieces of sub spatial information generated by photographing the surrounding reality space 600 in correspondence to the first sub photographing guide 610, the second sub photographing guide 620, and the third sub photographing guide 630.

According to an embodiment of the disclosure, the user 700 may change a location of the electronic apparatus 100 or a photographing view of the camera 210 to correspond a reality space displayed on the display 200 to the first sub photographing guide 610. While a part of the surrounding reality space 600 displayed on the display 200 corresponds to the first sub photographing guide 610, the user 700 may perform photographing at the location of the electronic apparatus 100 or at the photographing view of the camera 210. An image photographed at the location of the electronic apparatus 100 or at the photographing view of the camera 210 may include spatial information about a reality space corresponding to a space included in the first photographing guide 610 in the surrounding reality space 600. According to the first image 500 provided as the first sub photographing guide 610, an image photographed at the location of the electronic apparatus 100 or at the photographing view of the camera 210 may include spatial information about a reality space corresponding to a space included in the first image 500 in the surrounding reality space 600.

Referring to FIG. 7B, according to an embodiment of the disclosure, the second sub photographing guide 620 based on the second image 510 is shown. The user 700 may change a location of the electronic apparatus 100 or a photographing view of the camera 210 to correspond a part of the surrounding reality space 600 displayed on the display 200 to the second sub photographing guide 620. While a part of the surrounding reality space 600 displayed on the display 200 corresponds to the second sub photographing guide 620, the user 700 may perform photographing at the location of the electronic apparatus 100 or at the photographing view of the camera 210. An image photographed at the location of the electronic apparatus 100 or at the photographing view of the camera 210 may include spatial information about a reality space corresponding to a space included in the second sub photographing guide 620 in the surrounding reality space 600. According to the second image 510 provided as the second sub photographing guide 620, an image photographed at the location of the electronic apparatus 100 or at the photographing view of the camera 210 may include spatial information about a reality space corresponding to a space included in the second image 510 in the surrounding reality space 600.

Referring to FIG. 7C, according to an embodiment of the disclosure, the third sub photographing guide 630 based on the third image 520 is shown. The user 700 may change a location of the electronic apparatus 100 or a photographing view of the camera 210 to correspond a part of the surrounding reality space 600 displayed on the display 200 to the third sub photographing guide 630. While a part of the surrounding reality space 600 displayed on the display 200 corresponds to the third sub photographing guide 630, the user 700 may perform photographing at the location of the electronic apparatus 100 or at the photographing view of the camera 210. An image photographed at the location of the electronic apparatus 100 or at the photographing view of the camera 210 may include spatial information about a reality space corresponding to a space included in the third sub photographing guide 630 in the surrounding reality space 600. According to the third image 520 provided as the third sub photographing guide 630, an image photographed at the location of the electronic apparatus 100 or at the photographing view of the camera 210 may include spatial information about a reality space corresponding to a space included in the third image 520 in the surrounding reality space 600.

According to an embodiment of the disclosure, the second sub photographing guide 620 may be displayed on the display 200 after the space corresponding to the first sub photographing guide 610 is photographed. The third sub photographing guide 630 may be displayed on the display 200 after the space corresponding to the second sub photographing guide 620 is photographed. The user 700 may easily photograph spaces corresponding to spaces included in a plurality of filtered images in the surrounding reality space 600, according to the first to third sub photographing guides 610, 620, and 630 sequentially displayed on the display 200.

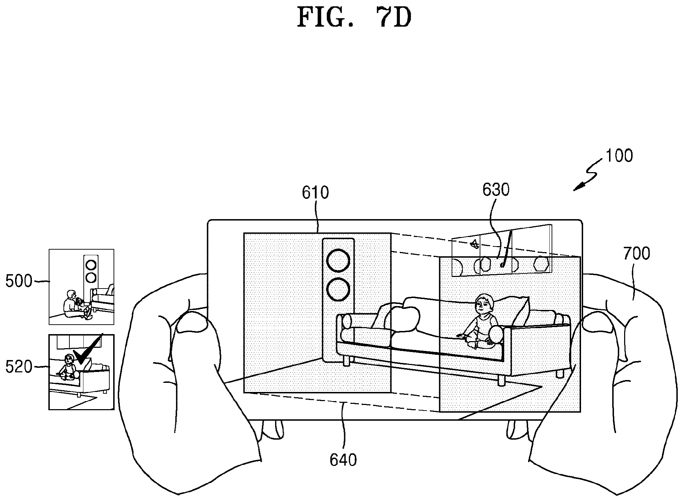

Referring to FIG. 7D, according to an embodiment of the disclosure, the at least one processor 230 may display a plurality of sub photographing guides together on the display 200. According to an embodiment of the disclosure, while the plurality of sub photographing guides are displayed on the display 200, the user 700 may start photographing according to any sub photographing guide among the plurality of sub photographing guides, and finish photographing according to another sub photographing guide among the plurality of sub photographing guides. According to an embodiment of the disclosure, the user 700 may start photographing in a reality space corresponding to a space included in an image corresponding to any sub photographing guide among the plurality of sub photographing guides in the surrounding reality space 600, and finish photographing in a reality space corresponding to a space included in an image corresponding to another sub photographing guide among the plurality of sub photographing guides. At this time, the photographing may be making a video of a reality space for a plurality of frames through the camera 210.

According to an embodiment of the disclosure, the at least one processor 230 may display a plurality of photographing orders on the plurality of sub photographing guides displayed on the display 200 to provide the photographing orders to the user 700. According to an embodiment of the disclosure, the user 700 may start photographing on any sub photographing guide with a first photographing order among the plurality of sub photographing guides, and finish photographing on another sub photographing guide with a final photographing order. The at least one processor 230 may obtain spatial information from a reality space corresponding to any sub photographing guide on which photographing has started through the camera 210 in the surrounding reality space 600 to a reality space corresponding to another sub photographing guide on which photographing has been finished. The at least one processor 230 may obtain spatial information from the reality space corresponding to the space included in an image corresponding to the sub photographing guide on which photographing has started through the camera 210 in the surrounding reality space 600 to the reality space corresponding to the space included in the image corresponding to the other sub photographing guide on which photographing has been finished.

According to an embodiment of the disclosure, upon filtering of a plurality of images from among a plurality of photographed images according to a preset condition, the at least one processor 230 may display a part of a plurality of sub photographing guides respectively corresponding to the plurality of images, through the display 200. According to an embodiment of the disclosure, the at least one processor 230 may display, on the display 200, two sub photographing guides corresponding to two images most spaced apart from each other, based on GPS information of the plurality of filtered images. The at least one processor 230 may display, on the display 200, two sub photographing guides corresponding to two images having the most non-overlapping key points in the plurality of filtered images, based on key point information of the plurality of filtered images. The at least one processor 230 may display a first photographing order on a sub photographing guide of the two sub photographing guides, and display a final photographing order on another sub photographing guide. The at least one processor 230 may obtain spatial information from a reality space corresponding to a space included in an image corresponding to a sub photographing guide on which photographing has started through the camera 210 in the surrounding reality space 600 to a reality space corresponding to a space included in an image corresponding to another sub photographing guide on which photographing has been finished.

According to an embodiment of the disclosure, as shown in FIG. 7D, the first sub photographing guide 610 and the third sub photographing guide 630 respectively corresponding to the first image 500 and the third image 520 with the most non-overlapping key points among the first image 500, the second image 510, and the third image 530 are displayed on the display 200. According to an embodiment of the disclosure, because the first image 500 and the third image 520 are most spaced apart from each other, the first image 500 and the third image 520 may have the most non-overlapping key points among key points included in the first image 500, the second image 510, and the third image 520.

According to an embodiment of the disclosure, the user 700 may start photographing on the first sub photographing guide 610 and finish photographing on the third sub photographing guide 630. Thereby, the at least one processor 230 may obtain spatial information about a space between the first image 500 and the third image 520, for example, a space included in the second image 510, as well as a space included in the first image 500 and a space included in the third image 520 in the surrounding reality space 600.

According to an embodiment of the disclosure, the at least one processor 230 may display a photographing guide line 640 connecting the first sub photographing guide 610 to the third sub photographing guide 630 on the display 200. According to an embodiment of the disclosure, the user 700 may start photographing on the first sub photographing guide 610, move along the photographing guide line 640, and then finish photographing on the third sub photographing guide 630. At this time, the photographing guide line 640 may be a line connecting an edge of the first sub photographing guide 610 to a corresponding edge of the third sub photographing guide 630. However, the disclosure is not limited thereto, and the photographing guide line 640 may be a line that passes a reality space corresponding to a sub photographing guide (for example, the second sub photographing guide 620) not displayed on the display 200, based on spaces included in the plurality of filtered images.

FIG. 8A is a view for describing content generated based on obtained spatial information and at least one detected object, according to an embodiment of the disclosure. FIG. 8B is a view for describing an operation of setting at least one of a location, shape, or size of at least one object detected from content, based on a control signal, according to an embodiment of the disclosure.

Referring to FIGS. 2, 4, 5B, and 8A, according to an embodiment of the disclosure, FIG. 8A shows content generated through the content generating module 227. In the content 140, a plurality of 3D objects 801, 802, 803, 811, and 821 generated through the 3D object generating module 430 may be positioned in a 3D space 800 generated through the 3D background generating module 440.

According to an embodiment of the disclosure, the obtained spatial information may include information about a reality space corresponding to a space included in the first image 500, a reality space corresponding to a space included in the second image 510, and a reality space corresponding to a space included in the third image 520. The 3D space 800 may be generated by modeling the reality space corresponding to the space included in the first image 500, the reality space corresponding to the space included in the second image 510, and the reality space corresponding to the space included in the third image 520 in 3D, based on the obtained spatial information.

According to an embodiment of the disclosure, a first person 3D object 801 corresponding to the first person 501 obtained from the first image 500, a pet 3D object 802 corresponding to the pet 502, and a ride 3D object 803 corresponding to the ride 503 may be positioned in a space corresponding to the space of the first image 500 in the 3D space 800. A second person 3D object 811 corresponding to the second person 511 obtained from the second image 510 may be positioned in a space corresponding to the space of the second image 510 in the 3D space 800. A third person 3D object 821 corresponding to the third person 521 obtained from the third image 520 may be positioned in a space corresponding to the space of the third image 520 in the 3D space 800.

According to an embodiment of the disclosure, locations, sizes, and shapes in 3D space 800 of the plurality of 3D objects 801, 802, 803, 811, and 821 included in the content 140 may be set by locations, sizes, and shapes between objects in the respective spaces of the first image 500, the second image 510, and the third image 520.

According to an embodiment of the disclosure, by generating the content 140 in which the first person 3D object 801, the pet 3D object 802, the ride 3D object 803, the second person 3D object 811, and the third person 3D object 821 corresponding to objects respectively obtained from the first image 500, the second image 510, and the third image 520 are positioned in the 3D space 800, a user 1010 may be provided with an experience of viewing the first image 500, the second image 510, and the third image 520 together through the content 140.

According to an embodiment of the disclosure, through the first image 500, the second image 510, and the third image 520 photographed on different dates, the user 1010 may be provided with experiences and memories of events that have occurred in a space corresponding to the 3D space 800 over several periods of time. According to an embodiment of the disclosure, the first person 501, the second person 511, and the third person 521 may be the same person, and in this case, the user 1010 may view the same person's activities in the space corresponding to the 3D space 800 over a long period of time by the content 140 generated according to the disclosure.

According to an embodiment of the disclosure, through the first image 500, the second image 510, and the third image 520 photographed at different views, the user 1010 may observe events that have occurred in the space corresponding to the 3D space 800 at a plurality of views.

Referring to FIGS. 2, 4, 5B, and 8B, according to an embodiment of the disclosure, FIG. 8B shows a case in which locations of the first person 3D object 804 and the pet 3D object 805 in the 3D space 800 have changed from those shown in FIG. 8A. Also, in FIG. 8B, a location and size of the ride 503 in the 3D space 800 are different from those shown in FIG. 8A.

According to an embodiment of the disclosure, locations of the first person 3D object 804 and the pet 3D object 805 in the 3D space 800 included in the content 141 may be different from locations of the first person 501 and the pet 502 in the space of the first image 500. A location and size of the ride 3D object 806 in the 3D space 800 included in the content 141 may be different from those of the ride 503 in the space of the first image 500.

According to an embodiment of the disclosure, the content 141 shown in FIG. 8B may be content 141 generated by setting at least one(s) of locations, shapes, or sizes of the plurality of 3D objects 804, 805, 806, 811, and 821 in the 3D space 800, based on a control signal including information about the at least one(s) of the locations, shapes, or sizes of the plurality of 3D objects 804, 805, 806, 811, and 821 in the 3D space 800. According to an embodiment of the disclosure, the user 700 may provide a user input of adjusting locations and sizes of the first person 3D object 804, the pet 3D object 805, and the ride 3D object 806 in the 3D space 800, through the user interface, and the control signal may be a signal generated based on the user input.

According to an embodiment of the disclosure, the content 141 may include dates respectively displayed on the plurality of 3D objects 804, 805, 806, 811, and 821. The dates respectively displayed on the plurality of 3D objects 804, 805, 806, 811, and 821 may be dates on which images including objects respectively corresponding to the plurality of 3D objects 804, 805, 806, 811, and 821 have been photographed. According to an embodiment of the disclosure, on the first person 3D object 804, a date (for example, 2021.07) on which the first image 500 including the first person 501 has been photographed may be displayed. On the second person 3D object 811, a date (for example, 2018.04) on which the second image 510 including the second person 511 has been photographed may be displayed. On the third person 3D object 821, a date (for example, 2017.03) on which the third image 520 including the third person 521 has been photographed may be displayed.

According to an embodiment of the disclosure, the user 1010 may generate content 140 including a desired object by selecting an object which he/she wants to obtain from among the first image 500, the second image 510, and the third image 520, through a selection signal based on a user input made through the user interface.

According to an embodiment of the disclosure, the user 1010 may generate content 140 having a desired location, shape, or size of a 3D object by setting at least one of the location, shape, or size of the 3D object in the 3D space 800, through a control signal based on a user input made through the user interface.

FIG. 9 is a flowchart illustrating an operation of displaying generated content on a display, according to an embodiment of the disclosure. Hereinafter, the same operations as those described above with reference to FIG. 3C are assigned the same reference numerals as those assigned to the operations described above with reference to FIG. 3C, and overlapping descriptions thereof will be omitted.

Referring to FIGS. 2, 3C, and 9, according to an embodiment of the disclosure, an operation method of the electronic apparatus 100 may include an operation S500 of displaying generated content through the display 200. According to an embodiment of the disclosure, the operation method of the electronic apparatus 100 may include the operation S500 of displaying the generated content through the display 200, after the operation S410 of generating the content.

According to an embodiment of the disclosure, the at least one processor 230 may execute the instructions or program code of the content providing module to display the generated content on the display 200.

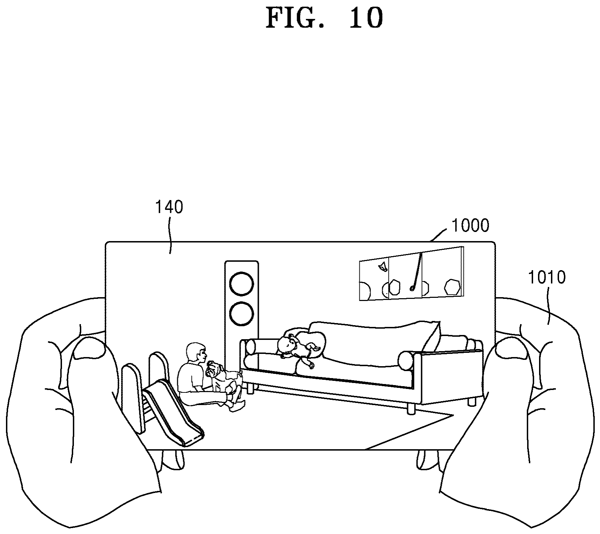

FIG. 10 is a view for describing an operation of displaying generated content on an electronic apparatus which is a mobile device, according to an embodiment of the disclosure.

Referring to FIGS. 2, 8A, 9, and 10, according to an embodiment of the disclosure, the electronic apparatus 1000 which is a mobile device may display generated content 140 on a display to provide the content 140 to the user 1010. The user 1010 may receive the content 140 through the electronic apparatus 1000. The user 1010 may hold the electronic apparatus 1000 which is a mobile device with his/her hand and view the content 140 displayed on the display.

According to an embodiment of the disclosure, the content 140 may include a 3D background and a 3D object, and in this case, the user 1010 may change a view at which the content 140 displayed on the display is observed by changing a location of the electronic apparatus 1000. According to an embodiment of the disclosure, the user 1010 may change a view at which the 3D background and 3D object included in the content 140 displayed on the display are observed, by moving the electronic apparatus 1000 up, down, right, or left.

According to an embodiment of the disclosure, the electronic apparatus 1000 shown in FIG. 10 may be the same as or different from the electronic apparatus 100 that generates content 140, as shown in FIGS. 1 to 8B. According to an embodiment of the disclosure, in the case in which the electronic apparatus 1000 shown in FIG. 10 is the same as the electronic apparatus 100 that generates content 140, the user 1010 may perform an operation of photographing a reality space through the camera 210 in a process of generating content 140. Thereafter, according to reception of the generated content 140, the user 1010 may view a 3D space and a 3D object through the content 140 without photographing the reality space through the camera 210.

According to an embodiment of the disclosure, in the case in which the electronic apparatus 1000 shown in FIG. 10 is different from the electronic apparatus 100 that generates content 140, the electronic apparatus 1000 shown in FIG. 10 may receive generated content 140 from the electronic apparatus 100 and provide the content 140 to the user 1010.

According to an embodiment of the disclosure, at least one image may be filtered from a plurality of photographed images based on a specific location, and in this case, a photographing guide may be displayed on the display 200 while a user using the electronic apparatus 100 is located at a location that is adjacent to a location (for example, the specific location) at which the at least one filtered image has been photographed. Also, the photographing guide may be displayed on the display 200 while the user executes a program or application for generating content 140 according to an embodiment of the disclosure.

Also, the photographing guide may be displayed on the display 200 and provided to a user using the electronic apparatus 100 even though the user is located at a location that is different from the specific location at which the at least one filtered image has been photographed. In this case, the photographing guide may allow the user to move to the specific location and photograph a surrounding reality space according to the photographing guide. Accordingly, the photographing guide may be used to advertise a shop, a tourist area, goods, an exhibition, a concert, etc. positioned at the specific location.

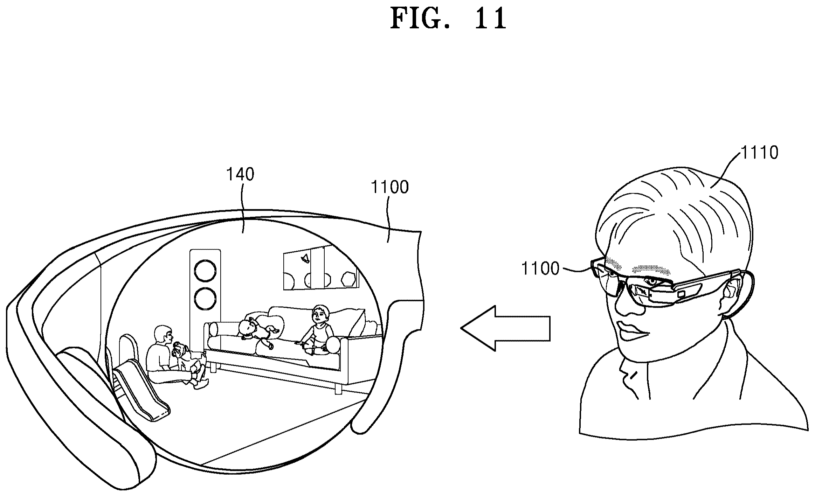

FIG. 11 is a view for describing an operation of displaying generated content on an electronic apparatus which is a HMD, according to an embodiment of the disclosure.

Referring to FIGS. 2, 8A, 9, and 11, according to an embodiment of the disclosure, an electronic apparatus 1100 which is a HMD may display generated content 140 on a display and provide the generated content 140 to a user 1110. The user 1110 may be provided with the content 140 through the electronic apparatus 1100. The user 1110 may view the content 140 displayed on the display 140 while wearing the electronic apparatus 1100 which is a HMD on his/her head.

According to an embodiment of the disclosure, in the case in which the content 140 includes a 3D background and a 3D object, the user 1110 may change an observation view of the content 140 displayed on the display by moving his/her head wearing the electronic apparatus 1100. According to an embodiment of the disclosure, the user 1010 may change a view at which a 3D background and a 3D object included in the content 140 displayed on the display are observed by moving his/her head up, down, left or right or rotating his/her head.

According to an embodiment of the disclosure, the electronic apparatus 1100 shown in FIG. 11 may be the same as or different from the electronic apparatus 100 that generates content 140, as shown in FIGS. 1 to 8B. According to an embodiment of the disclosure, in the case in which the electronic apparatus 1100 shown in FIG. 11 is the same as the electronic apparatus 100 that generates content 140, the user 1110 may perform an operation of photographing a reality space through the camera 210 in a process of generating content 140. After the content 140 is generated, the user 1110 may view a 3D space and a 3D object through the content 140 without photographing the reality space through the camera 210.

According to an embodiment of the disclosure, in the case in which the electronic apparatus 1100 shown in FIG. 11 is different from the electronic apparatus 100 that generates content 140, the electronic apparatus 1100 shown in FIG. 11 may receive generated content 140 from the electronic apparatus 100 and provide the content 140 to the user 1110.

FIGS. 10 and 11 show a case in which content is provided to users through electronic apparatuses that are a mobile device and a HMD. However, the disclosure is not limited thereto. An electronic apparatus that generates content 140 and provides the content 140, according to an embodiment of the disclosure, may include various types without being limited to any one type.

To achieve the above-stated technical objective, an electronic apparatus according to an embodiment of the disclosure may be provided. The electronic apparatus may include a camera. The electronic apparatus may include a display. The electronic apparatus may include a memory storing at least one instruction, and at least one processor configured to execute the at least one instruction stored in the memory. The at least one processor may be configured to execute the at least one instruction to obtain at least one preset object from at least one image stored in the memory. The at least one processor may be configured to execute the at least one instruction to display a photographing guide based on the at least one image through the display. The at least one processor may be configured to execute the at least one instruction to obtain spatial information by photographing a reality space corresponding to a space included in the at least one image according to the photographing guide, through the camera. The at least one processor may be configured to execute the at least one instruction to generate content based on the spatial information and the at least one object.

The at least one processor may be further configured to execute the at least one instruction to generate at least one 3D object respectively corresponding to the at least one object. The at least one processor may be further configured to execute the at least one instruction to generate a 3D space based on the spatial information. The at least one processor may be further configured to execute the at least one instruction to generate the content in which the at least one 3D object is positioned in the 3D space.

The at least one processor may be further configured to execute the at least one instruction to obtain a control signal including information about at least one of a location, a shape, or a size of the at least one 3D object in the 3D space. The at least one processor may be further configured to execute the at least one instruction to generate the content by setting the at least one of the location, the shape, or the size of the at least one 3D object in the 3D space, based on the control signal.

The at least one processor may be further configured to execute the at least one instruction to obtain a selection signal of selecting at least one object included in the at least one image. The at least one processor may be further configured to execute the at least one instruction to obtain the at least one object included in the selection signal from the at least one image based on the selection signal.

According to an embodiment of the disclosure, the at least one processor may be further configured to execute the at least one instruction to filter the at least one image from a plurality of photographed images stored in the memory, according to a preset condition. The at least one processor may be further configured to execute the at least one instruction to obtain the at least one preset object from the at least one filtered image.

According to an embodiment of the disclosure, the at least one processor may be further configured to execute the at least one instruction to display the reality space photographed through the camera, through the display. The at least one processor may be further configured to execute the at least one instruction to display the at least one image as the photographing guide, through the display.

According to an embodiment of the disclosure, the at least one processor may be further configured to execute the at least one instruction to display the photographing guide through the display so as to overlap the photographing guide with the reality space. The photographing guide may be translucent to be displayed together with the reality space on the display.

According to an embodiment of the disclosure, the at least one image may include a plurality of images. The photographing guide may include a plurality of sub photographing guides respectively corresponding to the plurality of images. The at least one processor may be further configured to execute the at least one instruction to sequentially display the plurality of sub photographing guides through the display. The at least one processor may be further configured to execute the at least one instruction to obtain sub spatial information by photographing, according to a sub photographing guide of the plurality of sub photographing guides sequentially displayed on the display, a reality space corresponding to a space included in an image corresponding to the sub photographing guide, through the camera. The spatial information may include a plurality of pieces of sub spatial information respectively generated according to the plurality of sub photographing guides.

According to an embodiment of the disclosure, the plurality of pieces of sub spatial information may be spatial information obtained by starting, according to displaying of a sub photographing guide among the plurality of sub photographing guides on the display, photographing in a space corresponding to a space included in an image corresponding to the sub photographing guide, through the camera, and finishing, according to displaying of another sub photographing guide among the plurality of sub photographing guides on the display, photographing in a space corresponding to a space included in an image corresponding to the other sub photographing guide through the camera.

According to an embodiment of the disclosure, the at least one processor may be further configured to execute the at least one instruction to display the generated content through the display.

To achieve the above-stated technical objective, an embodiment of the disclosure may provide an operation method of an electronic apparatus. The operation method of the electronic apparatus may include obtaining at least one preset object from at least one image stored in a memory. The operation method of the electronic apparatus may include displaying a photographing guide based on the at least one image through a display. The operation method of the electronic apparatus may include obtaining spatial information generated by photographing a reality space corresponding to a space included in the at least one image according to the photographing guide, through the camera. The operation method of the electronic apparatus may include generating content based on the spatial information and the at least one object.

According to an embodiment of the disclosure, the operation method of the electronic apparatus may further include generating at least one three-dimensional (3D) object respectively corresponding to the at least one object. The operation method of the electronic apparatus may further include generating a 3D space based on the spatial information. The generating of the content may include generating the content by positioning the at least one 3D object in the 3D space.

According to an embodiment of the disclosure, the operation method of the electronic apparatus may further include obtaining a selection signal of selecting at least one object included in the at least one image. The operation method of the electronic apparatus may further include obtaining the at least one object included in the selection signal from the at least one image, based on the selection signal.

According to an embodiment of the disclosure, the operation method of the electronic apparatus may further include filtering the at least one image from a plurality of photographed images stored in the memory according to a preset condition. The operation method of the electronic apparatus may further include obtaining the at least one preset object from the at least one filtered image.

The operation method of the electronic apparatus may further include displaying the reality space photographed through the camera on the display. The displaying of the photographing guide on the display may include displaying the at least one image as a photographing guide through the display.

According to an embodiment of the disclosure, the displaying of the photographing guide through the display may include displaying the photographing guide through the display so as to overlap the photographing guide with the reality space. The photographing guide may be translucent to be displayed together with the reality space on the display.

According to an embodiment of the disclosure, the at least one image may include a plurality of images. The photographing guide may include a plurality of sub photographing guides respectively corresponding to the plurality of images. The displaying of the photographing guide through the display may include sequentially displaying the plurality of sub photographing guides through the display. The obtaining of the spatial information may include obtaining sub spatial information by photographing, according to a sub photographing guide among the plurality of sub photographing guides sequentially displayed on the display, a reality space corresponding to a space included in an image corresponding to the sub photographing guide, through the camera. The spatial information may include a plurality of pieces of sub spatial information respectively generated according to the plurality of sub photographing guides.

According to an embodiment of the disclosure, the obtaining of the spatial information may include starting, according to displaying of a sub photographing guide among the plurality of sub photographing guides on the display, photographing in a reality space corresponding to a space included in an image corresponding to the sub photographing guide, through the camera. The obtaining of the spatial information may include finishing, according to displaying of another sub photographing guide among the plurality of sub photographing guides on the display, photographing in a reality space corresponding to a space included in an image corresponding to the other sub photographing guide through the camera to obtain the plurality of pieces of sub spatial information.

According to an embodiment of the disclosure, the operation method of the electronic apparatus may further include displaying the generated content through the display.

To achieve the above-stated technical objective, there may be provided a computer-readable recording medium storing a program for performing at least one method among the embodiments of the operation methods of the electronic apparatus disclosed in an embodiment of the disclosure on a computer.

The program that is executed on the electronic apparatus described in the disclosure may be implemented with a hardware component, a software component, and/or a combination of a hardware component and a software component. The program may be executed by all systems capable of executing computer-readable instructions.

The software may include a computer program, a code, an instruction, or a combination of one or more of these, for independently or collectively instructing or configuring a processing device to operate as desired.

The software may be implemented as a computer program including instructions stored in computer-readable storage media. The computer-readable storage media may include, for example, magnetic storage media (for example, ROM, RAM, a floppy disc, a hard disc, etc.) and optical readable media (for example, compact disc read-only memory (CD-ROM) and digital versatile disc (DVD)). The computer-readable recording media may be distributed to computer systems over a network, in which computer-readable codes may be stored and executed in a distributed manner. The recording media may be readable by a computer, stored in a memory, and executed in a processor.

The computer-readable storage media may be provided in the form of non-transitory storage media. Herein, 'non-transitory storage media' means that the storage media do not include a signal (for example, electromagnetic waves) and are tangible, without meaning that data is semi-permanently or temporarily stored in the storage media. For example, 'non-transitory" storage media may include a buffer in which data is temporarily stored.

Also, the program according to embodiments of the disclosure may be included in a computer program product and provided. The computer program product may be traded between a seller and a purchaser as a commodity.

The computer program product may include a software program and computer-readable storage media in which a software program is stored. For example, the computer program product may include a product in the form of a software program (for example, a downloadable application) that is electronically distributed through a manufacturer of the electronic apparatus 100 or an electronic market (for example, Samsung Galaxy Store). For electronic distribution, at least a part of the software program may be stored on storage media or may be created temporarily. In this case, the storage media may be storage media of a server of a manufacturer of the electronic apparatus 100, a server of an electronic market, or a relay server for temporarily storing a software program.

## Claims

1. An electronic apparatus (100) comprising:
a camera (210);
a display (200);
a memory (220) storing at least one instruction; and
at least one processor (230) configured to execute the at least one instruction stored in the memory (220),
wherein the at least one processor (230) is configured to execute the at least one instruction to
obtain at least one preset object from at least one image stored in the memory (220),
display a photographing guide (131) based on the at least one image through the display (200),
obtain spatial information by photographing a reality space (132) corresponding to a space included in the at least one image according to the photographing guide (131), through the camera (210), and
generate content (140) based on the spatial information and the at least one object.

2. The electronic apparatus (100) of claim 1, wherein
the at least one processor (230) is further configured to execute the at least one instruction to
generate at least one three-dimensional (3D) object respectively corresponding to the at least one object,
generate a 3D space based on the spatial information, and
generate the content (140) in which the at least one 3D object is positioned in the 3D space.

3. The electronic apparatus (100) of claim 2, wherein
the at least one processor (230) is further configured to execute the at least one instruction to
obtain a control signal including information about at least one of a location, a shape, or a size of the at least one 3D object in the 3D space, and
generate the content (140) by setting the at least one of the location, the shape, or the size of the at least one 3D object in the 3D space, based on the control signal.

4. The electronic apparatus (100) of any one of claims 1 to 3, wherein
the at least one processor (230) is further configured to execute the at least one instruction to
obtain a selection signal of selecting at least one object included in the at least one image and
obtain the at least one object included in the selection signal from the at least one image based on the selection signal.

5. The electronic apparatus (100) of any one of claims 1 to 4, wherein
the at least one processor (230) is further configured to execute the at least one instruction to
filter the at least one image from a plurality of photographed images stored in the memory (220), according to a preset condition, and
obtain the at least one preset object from the at least one filtered image.

6. The electronic apparatus of any one of claims 1 to 5, wherein
the at least one processor (230) is further configured to execute the at least one instruction to
display the reality space photographed through the camera (210), through the display (200), and
display the at least one image as the photographing guide (131), through the display (200).

7. The electronic apparatus (100) of claim 6, wherein
the at least one processor (230) is further configured to execute the at least one instruction to
display the photographing guide (131) through the display (200) so as to overlap the photographing guide (131) with the reality space,
wherein the photographing guide (131) is translucent to be displayed together with the reality space on the display (200).

8. The electronic apparatus (100) of any one of claims 1 to 7, wherein
the at least one image includes a plurality of images,
the photographing guide (131) includes a plurality of sub photographing guides respectively corresponding to the plurality of images,
the at least one processor (230) is further configured to execute the at least one instruction to
sequentially display the plurality of sub photographing guides through the display (200), and
obtain sub spatial information by photographing, according to a sub photographing guide of the plurality of sub photographing guides sequentially displayed on the display (200), a reality space corresponding to a space included in an image corresponding to the sub photographing guide, through the camera (210),
wherein the spatial information includes a plurality of pieces of sub spatial information respectively generated according to the plurality of sub photographing guides.

9. The electronic apparatus (100) of claim 8, wherein
the plurality of pieces of sub spatial information are each spatial information obtained by
starting, according to displaying of a sub photographing guide among the plurality of sub photographing guides on the display (200), photographing in a space corresponding to a space included in an image corresponding to the sub photographing guide, through the camera (210), and
finishing, according to displaying of another sub photographing guide among the plurality of sub photographing guides on the display (200), photographing in a space corresponding to a space included in an image corresponding to the other sub photographing guide through the camera (210).

10. The electronic apparatus of any one of claims 1 to 9, wherein
the at least one processor (230) is further configured to execute the at least one instruction to
display the generated content through the display (200).

11. An operation method of an electronic apparatus, the operation method comprising:
obtaining at least one preset object from at least one image stored in a memory (S100);
displaying a photographing guide based on the at least one image through a display (S200);
obtaining spatial information generated by photographing a reality space corresponding to a space included in the at least one image according to the photographing guide, through the camera (S300); and
generating content based on the spatial information and the at least one object (S400).

12. The operation method of claim 11,
further comprising:
generating at least one three-dimensional (3D) object respectively corresponding to the at least one object (S150); and
generating a 3D space based on the spatial information,
wherein the generating (S410) of the content comprises generating the content by positioning the at least one 3D object in the 3D space.

13. The operation method of any one of claim 11 or 12,
further comprising:
obtaining a selection signal of selecting at least one object included in the at least one image; and
obtaining the at least one object included in the selection signal from the at least one image, based on the selection signal (S110).

14. The operation method of any one of claim 11 to 13,
further comprising:
filtering the at least one image from a plurality of photographed images stored in the memory according to a preset condition (S50); and
obtaining the at least one preset object from the at least one filtered image (S100).

15. A computer-readable recording medium having recorded thereon a program for performing the method of any one of claims 11 to 14, on a computer.
